(19) Europäisches Patentamt
European Patent Office
Office européen des brevets

(11) EP 4 112 685 A1

(12) EUROPEAN PATENT APPLICATION
published in accordance with Art. 153(4) EPC

(43) Date of publication:
**04.01.2023 Bulletin 2023/01**

(21) Application number: **21759973.7**

(22) Date of filing: **08.02.2021**

(51) International Patent Classification (IPC):
***C08L 9/10*** *(2006.01)* ***B29C 41/14*** *(2006.01)*
***C08K 3/30*** *(2006.01)* ***C08K 5/36*** *(2006.01)*
***C08K 5/38*** *(2006.01)* ***C08K 5/42*** *(2006.01)*
***C08L 13/02*** *(2006.01)* ***C08L 71/00*** *(2006.01)*
***C09J 11/04*** *(2006.01)* ***C09J 11/06*** *(2006.01)*
***C09J 109/04*** *(2006.01)* ***B29K 9/00*** *(2006.01)*

(52) Cooperative Patent Classification (CPC):
**B29C 41/14; C08K 3/30; C08K 5/36; C08K 5/38; C08K 5/42; C08L 9/10; C08L 13/02; C08L 71/00; C09J 11/04; C09J 11/06; C09J 109/04**

(86) International application number:
**PCT/JP2021/004673**

(87) International publication number:
**WO 2021/171993 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2020 JP 2020030151**

(71) Applicant: **Zeon Corporation**
**Tokyo 100-8246 (JP)**

(72) Inventors:
- **KODEMURA, Junji**
  **Tokyo 100-8246 (JP)**
- **HAYASHI, Misa**
  **Tokyo 100-8246 (JP)**

(74) Representative: **Gerauer, Marc Philippé**
**Kraus & Weisert**
**Patentanwälte PartGmbB**
**Thomas-Wimmer-Ring 15**
**80539 München (DE)**

# (54) LATEX COMPOSITION

(57) Provided is a latex composition comprising a sulfur-based vulcanizing agent and a xanthogen compound mixed with a conjugated diene polymer latex, the aqueous dispersion of a sulfur-based vulcanizing agent being a dispersion in which the sulfur-based vulcanizing agent is dispersed in water using an anionic surfactant.

EP 4 112 685 A1

## Description

### TECHNICAL FIELD

The present invention pertains to a latex composition which can provide a molded film, such as a dip-molded article, having high mechanical strength such as tensile strength and tear strength and excellent mechanical strength stability. The present invention also pertains to a molded film, a dip-molded article, and an adhesive composition formed from such a latex composition.

### BACKGROUND ART

Conventionally, it has been known that molded films, such as dip-molded articles (e.g., teats, balloons, gloves, balloons, and stalls), used in contact with the human body can be obtained by dip molding a latex composition containing natural rubber latex. However, in some cases, such dip-molded articles are not suitable for use in direct contact with the mucosa or organs of a living body because the natural rubber latex contains proteins that may cause immediate (Type I) allergic reactions in the human body. In response to this problem, the removal of proteins in natural rubber latex by purification or the like and the use of a synthetic rubber latex instead of natural rubber latex have been studied.

For example, Patent Document 1 discloses a composition for dip molding which is a latex composition containing zinc oxide, sulfur, and a vulcanization accelerator mixed with a latex of synthetic polyisoprene as a synthetic rubber. Unfortunately, although the technique of Patent Document 1 can avoid the immediate (Type I) allergic reactions to proteins derived from natural rubber, due to the vulcanization accelerator contained therein, dip-molded articles obtained by this technique may sometimes trigger delayed (Type IV) allergic reactions when brought into contact with the human body. In addition, the absence of such a delayed (Type IV) allergy-inducing vulcanization accelerator results in a dip-molded article which has insufficient mechanical strength such as tensile strength and tear strength and insufficient mechanical strength stability. In view of this issue, there is a demand for a dip-molded article which is devoid of any delayed (Type IV) allergy-inducing vulcanization accelerators and has enhanced mechanical strength such as tensile strength and tear strength and enhanced mechanical strength stability.

### RELATED ART

### PATENT DOCUMENTS

Patent Document 1: International Publication No. WO 2014/129547

### SUMMARY OF THE INVENTION

### PROBLEM TO BE SOLVED BY THE INVENTION

The present invention has been devised in response to the current issues, and an objective thereof is to provide a latex composition which can provide a molded film, such as a dip-molded article, having high mechanical strength such as tensile strength and tear strength and excellent mechanical strength stability and to provide a molded film, a dip-molded article, and an adhesive composition formed from such a latex composition.

### MEANS FOR SOLVING PROBLEMS

As a result of dedicated research to achieve the aforementioned objective, the present inventors have found that the objective can be achieved by a latex composition prepared by mixing a sulfur-based vulcanizing agent and a xanthogen compound with a conjugated diene polymer latex, the sulfur-based vulcanizing agent being mixed in the form of an aqueous dispersion in which the sulfur-based vulcanizing agent is dispersed in water using an anionic surfactant. This finding has led to the completion of the present invention.

Specifically, the present invention provides a latex composition comprising an aqueous dispersion of a sulfur-based vulcanizing agent and a xanthogen compound mixed with a conjugated diene polymer latex, the aqueous dispersion of a sulfur-based vulcanizing agent being a dispersion in which the sulfur-based vulcanizing agent is dispersed in water using an anionic surfactant.

In the latex composition according to the present invention, the amount of the sulfur-based vulcanizing agent present is preferably 0.1 to 1.0 part by weight, more preferably 0.1 to 0.6 parts by weight with respect to 100 parts by weight of the conjugated diene polymer contained in the conjugated diene polymer latex.

In the latex composition according to the present invention, the xanthogen compound is preferably mixed with

the conjugated diene polymer latex in the form of an aqueous dispersion in which the xanthogen compound is dispersed in water using at least one of a nonionic surfactant and a nonionic anionic surfactant.

In the latex composition according to the present invention, the conjugated diene polymer latex is preferably a synthetic polyisoprene latex, a styrene-isoprene-styrene block copolymer latex, a protein-free natural rubber latex, or a nitrile group-containing conjugated diene polymer latex.

In the latex composition according to the present invention, the conjugated diene polymer latex is preferably a carboxy-modified conjugated diene polymer latex.

The present invention also provides a molded film, a dip-molded article, and an adhesive composition formed from such a latex composition.

EFFECTS OF INVENTION

The present invention can provide a latex composition which can provide a molded film, such as a dip-molded article, having high mechanical strength such as tensile strength and tear strength and excellent mechanical strength stability. The present invention can also provide a molded film, a dip-molded article, and an adhesive composition formed from such a latex composition.

DESCRIPTION OF EMBODIMENTS

A latex composition according to the present invention comprises an aqueous dispersion of a sulfur-based vulcanizing agent and a xanthogen compound mixed with a conjugated diene polymer latex, the aqueous dispersion of a sulfur-based vulcanizing agent being a dispersion in which the sulfur-based vulcanizing agent is dispersed in water using an anionic surfactant.

<Conjugated diene polymer latex>

Examples of the conjugated diene polymer latex used in the present invention include, but are not limited to, synthetic isoprene latexes, styrene-isoprene-styrene block copolymer (SIS) latexes, deproteinized natural rubber (protein-free natural rubber) latexes, nitrile group-containing conjugated diene copolymer latexes, and the like. Among these, preferred are latexes of polymers containing isoprene units, such as synthetic isoprene latexes, SIS latexes, and deproteinized natural rubber latexes. In particular, synthetic isoprene latexes are preferred.

In the case of using a synthetic polyisoprene latex as the conjugated diene polymer latex, the synthetic polyisoprene in the synthetic polyisoprene latex may be an isoprene homopolymer or may be a copolymer of isoprene and a different ethylenically unsaturated monomer copolymerizable with isoprene. The content of isoprene units in the synthetic polyisoprene is preferably 70% by weight or more, more preferably 90% by weight or more, still more preferably 95% by weight or more, particularly preferably 100% by weight (homopolymer of isoprene) with respect to the total monomer units for ease of obtaining a molded film, such as a dip-molded article, which is flexible and has excellent tensile strength.

Examples of different ethylenically unsaturated monomers copolymerizable with isoprene include conjugated diene monomers other than isoprene, such as butadiene, chloroprene, and 1,3-pentadiene; ethylenically unsaturated nitrile monomers, such as acrylonitrile, methacrylonitrile, fumaronitrile, and $\alpha$-chloroacrylonitrile; vinyl aromatic monomers, such as styrene and alkyl styrenes; ethylenically unsaturated carboxylic acid ester monomers, such as methyl (meth)acrylate (which means "methyl acrylate and/or methyl methacrylate", and hereinafter, the same applies to ethyl (meth)acrylate and the like), ethyl (meth)acrylate, butyl (meth)acrylate, and 2-ethylhexyl (meth)acrylate; and the like. One of these ethylenically unsaturated monomers copolymerizable with isoprene may be used alone, or two or more of them may be used in combination.

The synthetic polyisoprene can be obtained by conventionally known methods such as solution polymerization of isoprene optionally with a different ethylenically unsaturated copolymerizable monomer in an inert polymerization solvent using a Ziegler polymerization catalyst composed of trialkylaluminum-titanium tetrachloride or an alkyl lithium polymerization catalyst such as n-butyl lithium or sec-butyl lithium. Although the polymer solution of synthetic polyisoprene obtained by the solution polymerization may be used as it is to produce a synthetic polyisoprene latex, solid synthetic isoprene may be extracted from the polymer solution and be dissolved in an organic solvent to prepare a solution, which is then used to produce a synthetic polyisoprene latex.

In the case where a synthetic polyisoprene solution is prepared by the above-mentioned method, impurities including residual polymerization catalyst in the polymer solution may be removed. Further, an antioxidant described below may be added to the solution during or after the polymerization. Alternatively, commercially available solid synthetic polyisoprene may be used.

There are the following four types of isoprene units in the synthetic polyisoprene which differ in bonding geometry of isoprene units: cis bond unit, trans bond unit, 1,2-vinyl bond unit, and 3,4-vinyl bond unit. In order to obtain a molded

film, such as a dip-molded article, having enhanced tensile strength, the content of cis bond units among the isoprene units contained in the synthetic polyisoprene is preferably 70 wt% or more, more preferably 90 wt% or more, further more preferably 95 wt% or more with respect to the total isoprene units.

The weight average molecular weight of the synthetic polyisoprene is preferably 10,000 to 5,000,000, more preferably 500,000 to 5,000,000, still more preferably 800,000 to 3,000,000 as calibrated against polystyrene standards by gel permeation chromatography. Adjusting the weight average molecular weight of the synthetic polyisoprene within the above ranges tends to result in a molded film, such as a dip-molded article, having further enhanced tensile strength, tensile elongation, and tear strength and facilitate the production of the synthetic polyisoprene latex.

The polymer Mooney viscosity ($ML_{1+4}$, 100°C) of the synthetic polyisoprene is preferably 50 to 80, more preferably 60 to 80, still more preferably 70 to 80.

Examples of methods for providing the synthetic polyisoprene latex include (1) a method for producing the synthetic polyisoprene latex by emulsifying a solution or microsuspension of the synthetic polyisoprene, which is dissolved or finely dispersed in an organic solvent, in water in the presence of an emulsifier, followed by removal of the organic solvent, as required, and (2) a method for directly producing the synthetic polyisoprene latex by emulsion polymerization or suspension polymerization of isoprene alone or a mixture of isoprene with an ethylenically unsaturated monomer copolymerizable with isoprene in the presence of an emulsifier. The aforementioned production method (1) is preferable since this method allows the use of a synthetic polyisoprene in which cis bond units occupy a high proportion of the total isoprene units, and tends to result in a molded film, such as a dip-molded article, having excellent mechanical properties such as tensile strength.

Examples of organic solvents usable in the production method (1) include aromatic hydrocarbon solvents such as benzene, toluene, and xylene; alicyclic hydrocarbon solvents such as cyclopentane, cyclopentene, cyclohexane, and cyclohexene; aliphatic hydrocarbon solvents such as pentane, hexane, and heptane; halogenated hydrocarbon solvents such as methylene chloride, chloroform, and ethylene dichloride; and the like. Among these, preferred are alicyclic hydrocarbon solvents and aliphatic hydrocarbon solvents, more preferred are pentane, cyclohexane, and n-hexane, and particularly preferred is n-hexane.

The amount of the organic solvent used is preferably 2,000 parts by weight or less, more preferably 20 to 1,500 parts by weight, still more preferably 500 to 1,500 parts by weight with respect to 100 parts by weight of the synthetic polyisoprene.

Preferred emulsifiers for use in the production method (1) are ionic emulsifiers. In particular, anionic emulsifiers are more preferred. Specific examples of anionic emulsifiers include fatty acid salts such as sodium laurate, potassium myristate, sodium palmitate, potassium oleate, sodium linolenate, sodium rosinate, and potassium rosinate; alkylbenzene sulfonates such as sodium dodecylbenzenesulfonate, potassium dodecylbenzenesulfonate, sodium decylbenzenesulfonate, potassium decylbenzenesulfonate, sodium cetylbenzenesulfonate, and potassium cetylbenzenesulfonate; alkyl sulfosuccinates such as sodium di(2-ethylhexyl) sulfosuccinate, potassium di(2-ethylhexyl) sulfosuccinate, and sodium dioctyl sulfosuccinate; alkyl sulfate ester salts such as sodium lauryl sulfate and potassium lauryl sulfate; polyoxyethylene alkyl ether sulfate ester salts such as sodium polyoxyethylene lauryl ether sulfate and potassium polyoxyethylene lauryl ether sulfate; monoalkyl phosphate salts such as sodium lauryl phosphate and potassium lauryl phosphate; and the like.

Among these anionic emulsifiers, preferred are fatty acid salts, alkylbenzene sulfonates, alkyl sulfosuccinates, alkyl sulfate ester salts, and polyoxyethylene alkyl ether sulfate ester salts, and particularly preferred are fatty acid salts and alkylbenzene sulfonates.

A combination of at least one selected from the group consisting of alkylbenzene sulfonates, alkyl sulfosuccinates, alkyl sulfate ester salts, and polyoxyethylene alkyl ether sulfate ester salts and a fatty acid salt is preferably used to more efficiently remove a trace of residual polymerization catalyst (in particular, aluminum and titanium) derived from the synthetic polyisoprene and suppress the occurrence of aggregates in the process of producing a latex composition. In particular, a combination of an alkylbenzene sulfonate and a fatty acid salt is preferably used. In this case, preferred fatty acid salts are sodium rosinate and potassium rosinate, and preferred alkylbenzene sulfonates are sodium dodecylbenzenesulfonate and potassium dodecylbenzenesulfonate. One of these emulsifiers may be used alone, or two or more of them may be used in combination.

The above use of a combination of at least one selected from the group consisting of alkylbenzene sulfonates, alkyl sulfosuccinates, alkyl sulfate ester salts, and polyoxyethylene alkyl ether sulfate ester salts and a fatty acid salt provides a latex containing the at least one selected from the group consisting of alkylbenzene sulfonates, alkyl sulfosuccinates, alkyl sulfate ester salts, and polyoxyethylene alkyl ether sulfate ester salts and the fatty acid salt.

Examples of ionic emulsifiers other than anionic emulsifiers include copolymerizable emulsifiers such as sulfo esters of $\alpha,\beta$-unsaturated carboxylic acids, sulfate esters of $\alpha,\beta$-unsaturated carboxylic acids, sulfoalkylaryl ethers, and the like.

Further, any of nonionic emulsifiers such as polyoxyethylene alkyl ethers, polyoxyethylene alkyl phenol ethers, polyoxyethylene alkyl esters, and polyoxyethylene sorbitan alkyl esters may be used in combination as long as they do not inhibit coagulation by the action of a coagulant used in dip molding.

The amount of emulsifier(s) used in the production method (1) is preferably 0.1 to 50 parts by weight, more preferably 0.5 to 30 parts by weight with respect to 100 parts by weight of the synthetic polyisoprene. When two or more emulsifiers are used, the total amount thereof is preferably adjusted within the above ranges. Specifically, for example, when a combination of at least one selected from the group consisting of alkylbenzene sulfonates, alkyl sulfosuccinates, alkyl sulfate ester salts, and polyoxyethylene alkyl ether sulfate ester salts and a fatty acid salt is used, the total amount of the emulsifiers used preferably falls within the above ranges. By using emulsifier(s) in an amount within the above ranges, the occurrence of aggregates during emulsification can be more effectively suppressed.

When a combination of at least one selected from the group consisting of alkylbenzene sulfonates, alkyl sulfosuccinates, alkyl sulfate ester salts, and polyoxyethylene alkyl ether sulfate ester salts and a fatty acid salt is used as an anionic emulsifier, the ratio "fatty acid salt":"total of at least one selected from the group consisting of alkylbenzene sulfonates, alkyl sulfosuccinates, alkyl sulfate ester salts, and polyoxyethylene alkyl ether sulfate ester salts" on a weight basis is in the range of preferably 1:1 to 10:1, more preferably 1:1 to 7:1. The use of at least one selected from the group consisting of alkylbenzene sulfonates, alkyl sulfosuccinates, alkyl sulfate ester salts, and polyoxyethylene alkyl ether sulfate ester salts at a ratio controlled within the ranges suppresses foaming of the synthetic polyisoprene during handling thereof. This eliminates the need of processes such as long-term standing and addition of a defoamer, leading to improved work efficiency and reduced costs.

The amount of water used in the production method (1) is preferably 10 to 1,000 parts by weight, more preferably 30 to 500 parts by weight, most preferably 50 to 100 parts by weight with respect to 100 parts by weight of the organic solvent solution of the synthetic polyisoprene. Examples of the type of water used include hard water, soft water, deionized water, distilled water, zeolite water, and the like. Preferred are soft water, deionized water, and distilled water.

To emulsify the solution or microsuspension of the synthetic polyisoprene dissolved or finely dispersed in the organic solvent, in water in the presence of the emulsifier, any apparatus commercially available as an emulsifying machine or a dispersing machine can be used without limitation. The emulsifier can be added to the solution or microsuspension of the synthetic polyisoprene in any manner without limitation, and the emulsifier may be added in advance to either or both of water and the organic solvent solution or microsuspension of the synthetic polyisoprene, or may be added all at once or in portions to the liquid to be emulsified during the emulsification process.

Examples of emulsifying machines include batch emulsifying machines such as "Homogenizer" (trade name, available from IKA Works), "POLYTRON" (trade name, available from Kinematica AG), and "TK AUTO-HOMO MIXER" (trade name, available from Tokushu Kika Kogyo Co., Ltd.); continuous emulsifying machines such as "TK PIPELINE-HCMO MIXER" (trade name, available from Tokushu Kika Kogyo Co., Ltd.), "Colloid mill" (trade name, available from Shinko Pantec Co., Ltd.), "SLASHER" (trade name, available from NIPPON COKE & ENGINEERING CO., LTD.), "Trigonal wet grinder" (trade name, available from Mitsui Miike Chemical Engineering Machinery, Co., Ltd.), "CAVITRON" (trade name, available from Eurotec, Ltd.), "MILDER" (trade name, available from Pacific Machinery & Engineering Co., Ltd.), and "FINE FLOW MILL" (trade name, available from Pacific Machinery & Engineering Co., Ltd.); high-pressure emulsifying machines such as "Microfluidizer" (trade name, available from MIZUHO INDUSTRIAL CO., LTD.), "NANOMIZER" (trade name, available from NANOMIZER Inc.), and "APV GAULIN" (trade name, available from Manton-Gaulin Company); membrane emulsifying machines such as "Membrane emulsifying machine" (trade name, available from REICA Co., Ltd.); vibratory emulsifying machines such as "VIBROMIXER" (trade name, available from REICA Co., Ltd.); ultrasonic emulsifying machines such as "Ultrasonic homogenizer" (trade name, available from Branson Ultrasonics Corporation); and the like. The conditions for the emulsification process using such an emulsifying machine are not particularly limited, and the treatment temperature, the treatment time, and the like may be appropriately selected to ensure a desired dispersion state.

In the production method (1), the organic solvent is preferably removed from the emulsion prepared through the emulsification process.

Preferred methods for removing the organic solvent from the emulsion are methods with which the amount of the organic solvent (preferably alicyclic hydrocarbon solvent or aliphatic hydrocarbon solvent) in the resulting synthetic polyisoprene latex can be reduced to 500 ppm by weight or less. For example, methods such as vacuum distillation, normal pressure distillation, water vapor distillation, and centrifugation can be employed.

The organic solvent may be removed while adding a defoamer. The addition of a defoamer can prevent the synthetic polyisoprene from foaming.

Further, in order to increase the solids content of the synthetic polyisoprene latex, a concentration process by vacuum distillation, normal pressure distillation, centrifugation, membrane concentration, or the like may be performed as needed after removal of the organic solvent. In particular, centrifugation is preferably performed because it can increase the solids content of the synthetic polyisoprene latex and reduce the amount of residual emulsifier in the synthetic polyisoprene latex.

The centrifugation is preferably performed, for example, using a continuous centrifuge under the conditions in which the centrifugal force is preferably 100 to 10,000 G, the solids content of the synthetic polyisoprene latex before centrifugation is preferably 2 to 15 wt%, the feed flow rate into the centrifuge is preferably 500 to 1700 Kg/hr, and the

back pressure (gauge pressure) of the centrifuge is preferably 0.03 to 1.6 MPa. The synthetic polyisoprene latex can be obtained as a light liquid after the centrifugation. This process reduces the amount of residual emulsifier in the synthetic polyisoprene latex.

The solids content of the synthetic polyisoprene latex is preferably 30 to 70% by weight, more preferably 40 to 70% by weight, still more preferably 50 to 70% by weight. When the solids content is not less than the lower limit of the above ranges, a tear resistant molded film such as a tear resistant dip-molded article (described later) can be produced. When the solids content is not more than the upper limit of the above ranges, the viscosity of the synthetic polyisoprene latex will not increase too high, which facilitates transfer of the synthetic polyisoprene latex through a pipe and stirring of the synthetic polyisoprene latex in a preparation tank.

The volume average particle size of the synthetic polyisoprene latex is preferably 0.1 to 10 $\mu$m, more preferably 0.5 to 3 $\mu$m, still more preferably 0.5 to 2.0 $\mu$m. Adjusting the volume average particle size within the above ranges leads to appropriate viscosity of the latex to ensure ease of handling, and can suppress formation of a film on the surface of the latex during storage of the synthetic polyisoprene latex.

Further, the synthetic polyisoprene latex may contain additives typically used in the field of latex, such as a pH adjuster, a defoamer, a preservative, a cross-linking agent, a chelating agent, an oxygen scavenger, a dispersant, and an antioxidant.

Examples of pH adjusters include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; organic amine compounds such as trimethylamine and triethanolamine; and the like. Among these, preferred are alkali metal hydroxides and ammonia.

As described above, the conjugated diene polymer latex may be a styrene-isoprene-styrene block copolymer (SIS) latex. In the term "SIS", "S" represents a styrene block, and "I" represents an isoprene block.

The SIS in the SIS latex can be prepared by a conventionally known method such as block copolymerization of isoprene and styrene in an inert polymerization solvent using an active organic metal such as n-butyl lithium as an initiator. Although the resulting polymer solution of SIS may be used as it is to produce an SIS latex, solid SIS may be extracted from the polymer solution and be dissolved in an organic solvent to prepare a solution, which is then used to produce an SIS latex. Any method for producing the SIS latex can be used without limitation, but preferred is a method for producing the SIS latex by emulsifying a solution or microsuspension of SIS, which is dissolved or finely dispersed in an organic solvent, in water in the presence of an emulsifier and removing the organic solvent as required.

In this case, impurities including residual polymerization catalyst in the polymer solution after synthesis may be removed. During or after polymerization, an antioxidant (described later) may be added to the solution. Alternatively, commercially available solid SIS may be used.

Examples of usable organic solvents include the same solvents as those listed for the synthetic polyisoprene. Preferred are aromatic hydrocarbon solvents and alicyclic hydrocarbon solvents, and particularly preferred are cyclohexane and toluene.

The amount of the organic solvent used is typically 50 to 2,000 parts by weight, preferably 80 to 1,000 parts by weight, more preferably 100 to 500 parts by weight, still more preferably 150 to 300 parts by weight relative to 100 parts by weight of the SIS.

Examples of emulsifiers include the same emulsifiers as those listed for the synthetic polyisoprene. Preferred are anionic emulsifiers, and particularly preferred are potassium rosinate and sodium dodecylbenzenesulfonate.

The amount of the emulsifier used is preferably 0.1 to 50 parts by weight, more preferably 0.5 to 30 parts by weight with respect to 100 parts by weight of the SIS. The use of the emulsifier in an amount within the above ranges can result in latex having enhanced stability.

The amount of water used in the aforementioned method for producing the SIS latex is preferably 10 to 1,000 parts by weight, more preferably 30 to 500 parts by weight, most preferably 50 to 100 parts by weight with respect to 100 parts by weight of the organic solvent solution of the SIS. Examples of the type of water to be used include hard water, soft water, deionized water, distilled water, zeolite water, and the like. Further, any of polar solvents typified by alcohols such as methanol may be used in combination with water.

Examples of apparatuses for emulsifying the organic solvent solution or microsuspension of the SIS in water in the presence of the emulsifier include the same apparatuses as described above for the synthetic polyisoprene. The emulsifier can be added in any manner without limitation, and the emulsifier may be added in advance to either or both of water and the organic solvent solution or microsuspension of the SIS, or may be added all at once or in portions to the liquid to be emulsified during the emulsification process.

In the aforementioned method for producing the SIS latex, the SIS latex is preferably obtained by removing the organic solvent from the emulsion obtained by the emulsification process. The organic solvent can be removed from the emulsion by any method without limitation, and methods such as vacuum distillation, normal pressure distillation, water vapor distillation, and centrifugation can be employed.

Further, in order to increase the solids content of the SIS latex, a concentration process by vacuum distillation,

normal pressure distillation, centrifugation, membrane concentration, or the like may be performed as needed after removal of the organic solvent.

The organic solvent may be removed while adding a defoamer. The addition of a defoamer can further prevent foaming.

The solids content of the SIS latex is preferably 30 to 70 wt%, more preferably 40 to 70 wt%, still more preferably 50 to 70 wt%. When the solids content is not less than the lower limit of the above ranges, a tear resistant molded film such as a tear resistant dip-molded article (described later) can be produced. When the solids content is not more than the upper limit of the above ranges, the viscosity of the synthetic polyisoprene latex will not increase too high, which facilitates transfer of the SIS latex through a pipe and stirring of the SIS latex in a preparation tank.

Further, the SIS latex may contain additives generally used in the field of latex, such as a pH adjuster, a defoamer, a preservative, a cross-linking agent, a chelating agent, an oxygen scavenger, a dispersant, and an antioxidant. Examples of pH adjusters include the same pH adjusters as those described above for the synthetic polyisoprene. Preferred are alkali metal hydroxides and ammonia. In this case, although the pH of the SIS latex is not particularly limited, it is preferable, as described later, that the pH of a latex composition prepared using materials including the SIS latex be controlled to 10 or more before aging of the latex under predetermined conditions.

The content of styrene units in styrene blocks of the SIS contained in the SIS latex thus obtained is preferably 70 to 100 wt%, more preferably 90 to 100 wt%, further more preferably 100 wt% with respect to the total monomer units.

Further, the content of isoprene units in isoprene blocks of the SIS is preferably 70 to 100 wt%, more preferably 90 to 100 wt%, further more preferably 100 wt% with respect to the total monomer units.

The content ratio of styrene units to isoprene units in the SIS is typically in the range of 1:99 to 90:10, preferably 3:97 to 70:30, more preferably 5:95 to 50:50, further more preferably 10:90 to 30:70 as a weight ratio of "styrene units:isoprene units".

The weight average molecular weight of the SIS is preferably 10,000 to 1,000,000, more preferably 50,000 to 500,000, further more preferably 100,000 to 300,000 as calibrated against polystyrene standards by gel permeation chromatography. Adjusting the weight-average molecular weight of the SIS within the above ranges tends to result in a molded film, such as a dip-molded article, having improved balance of tensile strength and flexibility, and facilitate the production of the SIS latex.

The volume average particle size of latex particles (SIS particles) in the SIS latex is preferably 0.1 to 10 $\mu$m, more preferably 0.5 to 3 $\mu$m, still more preferably 0.5 to 2.0 pm. Adjusting the volume average particle size of the latex particles within the above ranges leads to appropriate viscosity of the latex to ensure ease of handling, and can suppress formation of a film on the surface of the latex during storage of the SIS latex.

Further, a nitrile group-containing conjugated diene copolymer latex can also be used as the conjugated diene polymer latex as described above.

The nitrile group-containing conjugated diene copolymer is a copolymer formed by copolymerization of an ethylenically unsaturated nitrile monomer with a conjugated diene monomer, and may be any of copolymers formed by copolymerization of these monomers with a different ethylenically unsaturated monomer that is copolymerizable with the former monomers and is used as needed in addition to the former monomers.

Examples of such conjugated diene monomers include 1,3-butadiene, isoprene, 2,3-dimethyl-1,3-butadiene, 2-ethyl-1,3-butadiene, 1,3-pentadiene, chloroprene, and the like. Among these, 1,3-butadiene and isoprene are preferable, and 1,3-butadiene is more preferable. One of these conjugated diene monomers may be used alone, or two or more of them may be used in combination. The content of conjugated diene monomer units formed from such conjugated diene monomer(s) in the nitrile group-containing conjugated diene copolymer is preferably 56 to 78 wt%, more preferably 56 to 73 wt%, further more preferably 56 to 68 wt%. Adjusting the content of conjugated diene monomer units within the above ranges can result in a molded film, such as a dip-molded article, having sufficient tensile strength and having a further improved texture and further improved elongation.

Such ethylenically unsaturated nitrile monomers may be any ethylenically unsaturated monomers containing a nitrile group without limitation. Examples thereof include acrylonitrile, methacrylonitrile, fumaronitrile, $\alpha$-chloroacrylonitrile, $\alpha$-cyanoethylacrylonitrile, and the like. Among these, acrylonitrile and methacrylonitrile are preferable, and acrylonitrile is more preferable. One of these ethylenically unsaturated nitrile monomers may be used alone, or two or more of them may be used in combination. The content of ethylenically unsaturated nitrile monomer units formed from such ethylenically unsaturated nitrile monomer(s) in the nitrile group-containing conjugated diene copolymer is preferably 20 to 40 wt%, more preferably 25 to 40 wt%, still more preferably 30 to 40 wt%. Adjusting the content of ethylenically unsaturated nitrile monomer units within the above ranges can result in a molded film, such as a dip-molded article, having sufficient tensile strength and having a further improved texture and further improved elongation.

Examples of different ethylenically unsaturated monomers that are copolymerizable with the conjugated diene monomer and the ethylenically unsaturated nitrile monomer include ethylenically unsaturated carboxylic acid monomers which are ethylenically unsaturated monomers having a carboxyl group; vinyl aromatic monomers such as styrene, alkyl styrenes, and vinylnaphthalene; fluoroalkyl vinyl ethers such as fluoroethyl vinyl ether; ethylenically unsaturated amide

monomers such as (meth)acrylamide, N-methylol (meth)acrylamide, N,N-dimethylol (meth)acrylamide, N-methoxymethyl (meth)acrylamide, and N-propoxymethyl (meth)acrylamide; ethylenically unsaturated carboxylic acid ester monomers such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, dibutyl maleate, dibutyl fumarate, diethyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, and dimethylaminoethyl (meth)acrylate; cross-linkable monomers such as divinylbenzene, polyethylene glycol di(meth)acrylate, polypropylene glycol di(meth)acrylate, trimethylolpropane tri(meth)acrylate, and pentaerythritol (meth)acrylate; and the like. One of these ethylenically unsaturated monomers may be used alone, or two or more of them may be used in combination.

Any ethylenically unsaturated carboxylic acid monomer can be selected without limitation as long as it is an ethylenically unsaturated monomer having a carboxyl group. Examples thereof include ethylenically unsaturated monocarboxylic acid monomers such as acrylic acid and methacrylic acid; ethylenically unsaturated polyvalent carboxylic acid monomers such as itaconic acid, maleic acid, and fumaric acid; ethylenically unsaturated polyvalent carboxylic acid anhydrides such as maleic anhydride and citraconic anhydride; ethylenically unsaturated polyvalent carboxylic acid partial ester monomers such as monobutyl fumarate, monobutyl maleate, and mono-2-hydroxypropyl maleate; and the like. Among these, ethylenically unsaturated monocarboxylic acids are preferable, and methacrylic acid is particularly preferable. These ethylenically unsaturated carboxylic acid monomers can also be used as alkali metal salts or ammonium salts. Further, one of these ethylenically unsaturated carboxylic acid monomers may be used alone, or two or more of them may be used in combination. The content of ethylenically unsaturated carboxylic acid monomer units formed from such an ethylenically unsaturated carboxylic acid monomer in the nitrile group-containing conjugated diene copolymer is preferably 2 to 5 wt%, more preferably 2 to 4.5 wt%, still more preferably 2.5 to 4.5 wt%. Adjusting the content of ethylenically unsaturated carboxylic acid monomer units within the above ranges can result in a molded film, such as a dip-molded article, having sufficient tear strength and having a further enhanced texture.

The content of other monomer units formed from such different ethylenically unsaturated monomer(s) in the nitrile group-containing conjugated diene copolymer is preferably 10 wt% or less, more preferably 5 wt% or less, still more preferably 3 wt% or less.

The nitrile group-containing conjugated diene copolymer can be obtained by copolymerization of a monomer mixture containing the aforementioned monomers, and a preferred method is copolymerization by emulsion polymerization. As an emulsion polymerization method, a conventionally known method can be employed.

In the emulsion polymerization of the monomer mixture containing the aforementioned monomers, polymerization auxiliary materials generally used, such as an emulsifier, a polymerization initiator, and a molecular weight modifier, can be used. These polymerization auxiliary materials can be added by any method without limitation, and any method such as initial one-time addition, portion-wise addition, and continuous addition may be employed.

Examples of emulsifiers include, but are not particularly limited to, nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as alkylbenzene sulfonates including potassium dodecylbenzene sulfonate and sodium dodecylbenzene sulfonate, higher alcohol sulfate salts, and alkyl sulfosuccinates; cationic emulsifiers such as alkyl trimethyl ammonium chlorides, dialkyl ammonium chlorides, and benzyl ammonium chloride; copolymerizable emulsifiers such as sulfo esters of $\alpha,\beta$-unsaturated carboxylic acids, sulfate esters of $\alpha,\beta$-unsaturated carboxylic acids, and sulfoalkyl aryl ethers; and the like. Among these, anionic emulsifiers are preferable, alkylbenzene sulfonates are more preferable, and potassium dodecylbenzene sulfonate and sodium dodecylbenzene sulfonate are particularly preferable. One of these emulsifiers may be used alone, or two or more of them may be used in combination. The amount of emulsifier(s) used is preferably 0.1 to 10 parts by weight with respect to 100 parts by weight of the monomer mixture.

Examples of polymerization initiators include, but are not particularly limited to, inorganic peroxides such as sodium persulfate, potassium persulfate, ammonium persulfate, potassium superphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, 2,5-dimethylhexane-2,5-dihydroperoxide, di-t-butyl peroxide, di-$\alpha$-cumyl peroxide, acetyl peroxide, isobutyryl peroxide, and benzoyl peroxide; azo compounds such as azobisisobutyronitrile, azobis-2,4-dimethylvaleronitrile, and methyl azobisisobutyrate; and the like. One of these polymerization initiators may be used alone, or two or more of them may be used in combination. The amount of such polymerization initiator(s) used is preferably 0.01 to 10 parts by weight, more preferably 0.01 to 2 parts by weight with respect to 100 parts by weight of the monomer mixture.

Further, the peroxide initiators can be used in combination with reductants as redox polymerization initiators. Examples of such reductants include, but are not particularly limited to, compounds containing reduced metal ions such as ferrous sulfate and cuprous naphthenate; sulfonic acid compounds such as sodium methanesulfonate; amine compounds such as dimethylaniline; and the like. One of these reductants may be used alone, or two or more of them may be used in combination. The amount of reductant(s) used is preferably 3 to 1000 parts by weight with respect to 100

parts by weight of the peroxides.

The amount of water used in the emulsion polymerization is preferably 80 to 600 parts by weight, particularly preferably 100 to 200 parts by weight with respect to 100 parts by weight of all monomers used.

Examples of methods of adding the monomers include a method of adding the monomers to be used into a reactor all at once, a method of adding monomers continuously or intermittently as the polymerization proceeds, a method of adding a portion of the monomers to react the monomers to a specific conversion ratio and then adding the remaining monomers continuously or intermittently to complete polymerization, and the like. Any one of these methods may be employed. In the case of mixing the monomers and thereafter adding the mixture continuously or intermittently, the composition of the mixture may be fixed or varied. Further, the monomers may be mixed in advance and then added into the reactor, or may be separately added into the reactor.

Further, polymerization auxiliary materials such as a chelating agent, a dispersant, a pH adjuster, an oxygen scavenger, and a particle size modifier can be used as required, and both of the type and the amount of these polymerization auxiliary materials used are not particularly limited.

The polymerization temperature during the emulsion polymerization, although not specifically limited, is typically 3 to 95°C, preferably 5 to 60°C. The polymerization time is about 5 to 40 hours.

The monomer mixture is subjected to emulsion polymerization as described above, and the polymerization reaction is stopped by cooling the polymerization system or adding a polymerization terminator at the time when a predetermined polymerization conversion ratio is reached. The polymerization conversion ratio at which the polymerization reaction is stopped is preferably 90 wt% or more, more preferably 93 wt% or more.

Examples of polymerization terminators include, but are not particularly limited to, hydroxylamine, hydroxyamine sulfate, diethylhydroxylamine, hydroxyaminesulfonic acid and alkali metal salts thereof, sodium dimethyldithiocarbamate, hydroquinone derivatives, catechol derivatives, and aromatic hydroxydithiocarboxylic acids such as hydroxydimethylbenzenethiocarboxylic acid, hydroxydiethylbenzenedithiocarboxylic acid, and hydroxydibutylbenzenedithiocarboxylic acid, and alkali metal salts thereof, and the like. The amount of such a polymerization terminator used is preferably 0.05 to 2 parts by weight with respect to 100 parts by weight of the monomer mixture.

After the polymerization reaction is stopped, as needed, unreacted monomers are removed, and the solids content and the pH of the product are adjusted, so that a latex of the nitrile group-containing conjugated diene copolymer can be obtained.

Further, an antioxidant, a preservative, an antibacterial agent, a dispersant, and the like may be appropriately added to the latex of the nitrile group-containing conjugated diene copolymer as required.

The number average particle size of the latex of the nitrile group-containing conjugated diene copolymer is preferably 60 to 300 nm, more preferably 80 to 150 nm. The particle size can be adjusted to a desired value, for example, by controlling the amounts of emulsifier(s) and polymerization initiator(s) used.

As described above, a deproteinized natural rubber (protein-free natural rubber) latex may be used as the conjugated diene polymer latex. One usable deproteinized rubber latex is that known as so-called "deproteinized natural rubber latex" obtained by a conventionally known protein removal method such as a method involving decomposing proteins in a natural rubber latex using agents such as a protease and a surfactant, and removing the proteins by washing, centrifugation, or the like.

Although the conjugated diene polymer used in the present invention may be a synthetic polyisoprene, a styrene-isoprene-styrene block copolymer (SIS), a nitrile group-containing conjugated diene copolymer, a deproteinized natural rubber, or the like as described above, the conjugated diene polymer is not limited to these examples, and a butadiene polymer, a styrene-butadiene copolymer, or the like may be used.

Such a butadiene polymer may be a homopolymer of 1,3-butadiene as a conjugated diene monomer, or may be a copolymer formed by copolymerization of 1,3-butadiene as a conjugated diene monomer with a different ethylenically unsaturated monomer that is copolymerizable with 1,3-butadiene.

Further, such a styrene-butadiene copolymer may be a copolymer formed by copolymerization of 1,3-butadiene as a conjugated diene monomer with styrene, or may be a copolymer formed by copolymerization of these monomers with a different ethylenically unsaturated monomer that is copolymerizable with the former monomers and is used as required in addition to the former monomers.

The conjugated diene polymer used in the present invention may be an acid-modified conjugated diene monomer obtained through modification with a monomer having an acidic group, and is preferably a carboxy-modified conjugated diene polymer prepared through carboxy modification. Such a carboxy-modified conjugated diene polymer can be prepared by modifying the conjugated diene polymer described above with a monomer having a carboxyl group. It should be noted that in the case where an ethylenically unsaturated carboxylic acid monomer is incorporated as a different ethylenically unsaturated monomer into a nitrile group-containing conjugated diene copolymer, the modification with a monomer having a carboxyl group (described later) is not always necessary because the copolymer is already carboxy-modified.

The conjugated diene polymer can be modified with the monomer having a carboxyl group by any method

without limitation. Examples thereof include graft-polymerization of the monomer having a carboxyl group onto the conjugated diene polymer in an aqueous phase. Any method can be used without limitation to graft-polymerize the monomer having a carboxyl group onto the conjugated diene polymer in an aqueous phase, and conventionally known methods may be used. One preferred example is that after adding the monomer having a carboxyl group and a graft polymerization catalyst to the conjugated diene polymer latex, the monomer having a carboxyl group is reacted with the conjugated diene polymer in the aqueous phase.

Examples of graft polymerization catalysts include, but are not limited to, inorganic peroxides such as sodium persulfate, potassium persulfate, ammonium persulfate, potassium superphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide; azo compounds such as 2,2'-azobisisobutyronitrile, azobis-2,4-dimethylvaleronitrile, and methyl azobisisobutyrate; and the like. From the viewpoint of providing a molded film, such as a dip-molded article, having further enhanced tensile strength, organic peroxides are preferable, and 1,1,3,3-tetramethylbutyl hydroperoxide is particularly preferable. One of these graft polymerization catalysts may be used alone, or two or more of them may be used in combination.

One of the graft polymerization catalysts described above may be used alone, or two or more of them may be used in combination. Although the amount of the graft polymerization catalyst used varies depending on the type thereof, it is preferably 0.1 to 10 parts by weight, more preferably 0.2 to 5 parts by weight with respect to 100 parts by weight of the conjugated diene polymer. Further, the graft polymerization catalyst can be added by any method without limitation, and any known addition method such as one-time addition, portion-wise addition, or continuous addition can be used.

Organic peroxides can be used in combination with reductants as redox polymerization initiators. Examples of such reductants include, but are not limited to, compounds containing reduced metal ions such as ferrous sulfate and cuprous naphthenate; sulfinates such as sodium hydroxymethanesulfinate; amine compounds such as dimethylaniline; and the like. One of these reductants may be used alone, or two or more of them may be used in combination.

The amount of reductant(s) added, although not particularly limited, is preferably 0.01 to 1 part by weight with respect to 1 part by weight of the organic peroxide(s).

The organic peroxides and the reductants can be added by any method without limitation, and each can be added by a known addition method such as one-time addition, portion-wise addition, or continuous addition.

Although the reaction temperature during the reaction of the monomer having a carboxyl group with the conjugated diene polymer is not specifically limited, it is preferably 15 to 80°C, more preferably 30 to 50°C. The reaction time for the reaction of the monomer having a carboxyl group with the conjugated diene polymer may be appropriately set according to the aforementioned reaction temperature, and is preferably 30 to 300 minutes, more preferably 60 to 120 minutes.

The solids content of the conjugated diene polymer latex before the reaction of the monomer having a carboxyl group with the conjugated diene polymer is preferably 5 to 60 wt%, more preferably 10 to 40 wt%, although not specifically limited thereto.

Examples of monomers having a carboxyl group include ethylenically unsaturated monocarboxylic acid monomers such as acrylic acid and methacrylic acid; ethylenically unsaturated polyvalent carboxylic acid monomers such as itaconic acid, maleic acid, fumaric acid, and butene tricarboxylic acid; ethylenically unsaturated polyvalent carboxylic acid partial ester monomers such as monobutyl fumarate, monobutyl maleate, and mono-2-hydroxypropyl maleate; polyvalent carboxylic acid anhydrides such as maleic anhydride and citraconic anhydride; and the like. Ethylenically unsaturated monocarboxylic acid monomers are preferable, acrylic acid and methacrylic acid are more preferable, and methacrylic acid is particularly preferable because further remarkable effects of carboxy modification can be achieved. One of these monomers may be used alone, or two or more of them may be used in combination. It should be noted that the aforementioned carboxyl group is intended to encompass forms of salts with alkali metals, ammonia, and the like.

The amount of the monomer having a carboxyl group used is preferably 0.01 to 100 parts by weight, more preferably 0.01 to 40 parts by weight, still more preferably 0.5 to 20 parts by weight, further still more preferably 2 to 5 parts by weight with respect to 100 parts by weight of the conjugated diene polymer. The use of the monomer having a carboxyl group in an amount within the aforementioned ranges results in a latex composition which has more appropriate viscosity and therefore is easy to transfer, and a molded film, such as a dip-molded article, formed using the resulting latex composition has further enhanced tear strength.

The monomer having a carboxyl group can be added to the conjugated diene polymer latex by any method without limitation, and any known addition method such as one-time addition, portion-wise addition, or continuous addition can be used.

Although the degree of modification of the carboxy-modified conjugated diene polymer with the monomer having a carboxyl group may be appropriately controlled according to the intended use of the conjugated diene polymer latex composition to be obtained, it is preferably 0.01 to 10 wt%, more preferably 0.2 to 5 wt%, still more preferably 0.3 to 3 wt%, particularly preferably 0.4 to 2 wt%, and may be 0.4 to 1 wt%, for example. The degree of modification is represented by the formula below.

$$\text{Degree of modification (wt\%)} = (X/Y) \times 100$$

In the formula above, X represents the weight of units of the monomer having a carboxyl group in the carboxy-modified conjugated diene polymer, and Y represents the weight of the carboxy-modified conjugated diene polymer. X can be determined, for example, by performing $^1$H-NMR analysis on the carboxy-modified conjugated diene polymer and performing a calculation based on the results of the $^1$H-NMR analysis, or by determining its acid content by neutralization titration and performing a calculation based on the resulting acid content.

Further, the latex of a conjugated diene polymer (including an acid-modified conjugated diene polymer) used in the present invention may contain additives that are generally used in the field of latex, such as a pH adjuster, a defoamer, a preservative, a chelating agent, an oxygen scavenger, a dispersant, and an antioxidant.

Examples of pH adjusters include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; organic amine compounds such as trimethylamine and triethanolamine; and the like. Among these, preferred are alkali metal hydroxides and ammonia.

The solids content of the latex of a conjugated diene polymer (including an acid-modified conjugated diene polymer) used in the present invention is preferably 30 to 70 wt%, more preferably 40 to 70 wt%, still more preferably 50 to 70 wt%. Adjusting the solids content within the above ranges is more effective in suppressing the occurrence of aggregates in the latex, and is more effective in suppressing separation of polymer particles during storage of the latex.

The latex composition according to the present invention can be obtained by mixing an aqueous dispersion of a sulfur-based vulcanizer and a xanthogen compound with the conjugated diene polymer latex.

The aqueous dispersion of a sulfur-based vulcanizer is prepared by dispersing the sulfur-based vulcanizer in water using an anionic surfactant.

Typically, sulfur-based vulcanizers are used in the form of powder because they are solid at normal temperature and do not dissolve in water. Studies by the present inventors have revealed the following facts: Adding a sulfur-based vulcanizing agent in the form of powder as it is together with a xanthogen compound to a latex composition containing a conjugated diene polymer results in a molded film, such as a dip-molded article, having insufficient mechanical strength such as tensile strength and tear strength and insufficient mechanical strength stability. However, adding a sulfur-based vulcanizing agent in the form of an aqueous dispersion using an anionic surfactant to a latex composition containing a conjugated diene polymer results in a molded film, such as a dip-molded article, having enhanced mechanical strength such as tensile strength and tear strength and enhanced mechanical strength stability. In particular, the present inventors have found that the problem of insufficient mechanical strength such as tensile strength and tear strength and insufficient mechanical strength stability, which occurs when a sulfur-based vulcanizing agent is added in the form of powder as it is to a latex composition containing a conjugated diene polymer, is unique to using the sulfur-based vulcanizer in combination with a xanthogen compound, and that this problem unique to using a sulfur-based vulcanizer in combination with a xanthogen compound can be solved by adding the sulfur-based vulcanizer in the form of an aqueous dispersion using an anionic surfactant. In addition, the present inventors have found that even when the amount of the sulfur-based vulcanizing agent used is comparatively small, sufficient mechanical strength and sufficient mechanical strength stability can be achieved by adding the sulfur-based vulcanizing agent in the form of an aqueous dispersion using an anionic surfactant. Since the amount of the sulfur-based vulcanizing agent used can be reduced, a molded film, such as a dip-molded article, can be obtained in which a more uniform crosslink density is achieved and overvulcanization is suppressed.

Examples of the sulfur-based vulcanizing agent include, but are not limited to, sulfur such as powder sulfur, flowers of sulfur, precipitated sulfur, colloid sulfur, surface-treated sulfur, and insoluble sulfur; sulfur-containing compounds such as sulfur chloride, sulfur dichloride, morpholine disulfide, alkyl phenol disulfides, caprolactam disulfide (N,N'-dithio-bis(hexahydro-2H-azepinone-2)), phosphorus-containing polysulfides, polymer polysulfides, and 2-(4'-morpholinodithio)benzothiazole; and the like. Among these, sulfur can be preferably used. One of these sulfur-based vulcanizing agents may be used alone, or two or more of them may be used in combination.

The volume average particle size of the sulfur-based vulcanizing agent in the aqueous dispersion of the sulfur-based vulcanizing agent is preferably 0.01 to 10 μm, more preferably 0.1 to 5 μm, still more preferably 0.5 to 2 pm. By selecting a volume average particle size of the sulfur-based vulcanizing agent within the aforementioned ranges, the dispersibility of the sulfur-based vulcanizing agent in the aqueous dispersion of the sulfur-based vulcanizing agent can be enhanced.

The content of the sulfur-based vulcanizing agent in the aqueous dispersion of the sulfur-based vulcanizing agent is preferably 30 to 70 parts by weight, more preferably 40 to 60 parts by weight of the total weight of the aqueous dispersion of the sulfur-based vulcanizing agent. Adjusting the content of the sulfur-based vulcanizing agent within the aforementioned ranges can result in a molded film, such as a dip-molded article, which can avoid delayed (Type IV) allergic reactions and has further enhanced tensile strength.

The anionic surfactant is not specifically limited. Preferred examples thereof include aromatic sulfonic acid

derivatives, fatty acid salts, alkylbenzene sulfonates, alkyl sulfosuccinates, alkyl sulfate ester salts, polyoxyethylene alkyl ether sulfate ester salts, monoalkyl phosphates, and the like. More preferred are aromatic sulfonic acid derivatives. One of these anionic surfactants may be used alone, or two or more of them may be used in combination.

Although any aromatic sulfonic acid derivative can be selected without limitation, compounds represented by general formula (1) below are preferred.

[Chem 1]

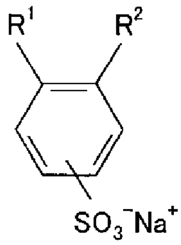

···(1)

(In general formula (1), $R^1$ and $R^2$ are each independently a hydrogen atom or any organic group, and may be linked together to form a ring structure.)

Examples of organic groups for $R^1$ and $R^2$ which are not linked together include, but are not limited to, alkyl groups having 1 to 30 carbon atoms such as a methyl group, an ethyl group, an n-propyl group, an isopropyl group, an n-butyl group, an isobutyl group, a sec-butyl group, a t-butyl group, an n-pentyl group, an n-hexyl group, an n-heptyl group, an n-octyl group, an n-nonyl group, and an n-decyl group; cycloalkyl groups having 3 to 30 carbon atoms such as a cyclopropyl group, a cyclopentyl group, a cyclohexyl group, a cycloheptyl group, and a cyclooctyl group; aryl groups having 6 to 60 carbon atoms such as a phenyl group, a biphenyl group, a naphthyl group, and an anthranil group; alkoxy groups having 1 to 30 carbon atoms such as a methoxy group, an ethoxy group, an n-propoxy group, an isopropoxy group, an n-butoxy group, an isobutoxy group, a sec-butoxy group, a t-butoxy group, an n-pentyloxy group, an n-hexyloxy group, and a phenoxy group; and the like. These organic groups may have a substituent at any position thereof.

In the case where $R^1$ and $R^2$ are linked together to form a ring structure, the ring structure is not specifically limited. Preferred are aromatic compounds, more preferred are benzene ring-containing aromatic compounds such as benzene and naphthalene, and particularly preferred is naphthalene. These ring structures may have a substituent at any position thereof.

In the present invention, examples of particularly preferred aromatic sulfonic acid derivatives among the compounds represented by general formula (1) are those in which $R^1$ and $R^2$ are linked together to form a ring structure, so that a benzene ring is present in general formula (1). More specifically, compounds having a structure represented by general formula (2) below are preferably used.

[Chem 2]

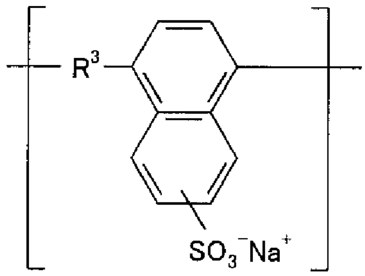

···(2)

(In general formula (2), $R^3$ is a divalent hydrocarbon group optionally having a substituent.)

In general formula (2), $R^3$ may be any divalent hydrocarbon group optionally having a substituent, and is not specifically limited. Preferred are alkylene groups having 1 to 10 carbon atoms, and particularly preferred is a methylene group.

Additionally, preferred aromatic sulfonic acid derivatives have repeating structures represented by general formula (2). The number of repeating structures represented by general formula (2) is preferably 10 to 100, more preferably 20 to 50 although not specifically limited thereto.

The weight average molecular weight of the aromatic sulfonic acid derivatives is preferably 500 to 100,000, more preferably 3,000 to 50,000, further more preferably 5,000 to 30,000.

The content of the anionic surfactant in the aqueous dispersion of the sulfur-based vulcanizing agent is preferably 0.01 to 10 parts by weight, more preferably 0.1 to 8 parts by weight, still more preferably 3 to 7 parts by weight with respect to 100 parts by weight of the sulfur-based vulcanizing agent although not specifically limited thereto. The presence of the anionic surfactant in an amount within the aforementioned ranges can further enhance the dispersibility of the sulfur-based vulcanizing agent in the aqueous dispersion of the sulfur-based vulcanizing agent, which in turn results in producing a molded film, such as a dip-molded article, having further enhanced tensile strength and tear strength and having further enhanced tensile strength stability and tear strength stability.

A preferable method for producing the aqueous dispersion of the sulfur-based vulcanizing agent is to mix the sulfur-based vulcanizing agent, the anionic surfactant, and water, and then subject the resulting mixture to a pulverizing treatment. The pulverizing treatment is not specifically limited as long as it is a treatment by which the sulfur-based vulcanizing agent contained in the aqueous dispersion can be pulverized and aggregation of the sulfur-based vulcanizing agent can be suppressed. Examples thereof include methods using known crushing machines such as a method using a crushing machine which utilizes a shearing action or a grinding action and a method using an agitating crushing machine. Specifically, a crushing machine such as a roll mill, a hammer mill, an oscillating mill, a jet mill, a ball mill, a planetary ball mill, a bead mill, a sand mill, or a three-roll mill can be used. Among these, preferred is to perform the pulverizing treatment using a ball mill, a planetary ball mill, or a bead mill.

For example, in the case of using a ball mill in the pulverizing treatment, it is preferable to perform the pulverizing treatment using media having a media size of preferably $\phi$5 to $\phi$50 mm, more preferably $\phi$10 to $\phi$35 mm at a rotational speed of preferably 10 to 300 rpm, more preferably 10 to 100 rpm for a treatment time of preferably 24 to 120 hours, more preferably 24 to 72 hours. In the case of using a planetary ball mill in the pulverizing treatment, it is preferable to perform the pulverizing treatment using media having a media size of preferably $\phi$0.1 to $\phi$5 mm, more preferably $\phi$0.3 to $\phi$3 mm at a rotational speed of preferably 100 to 1000 rpm, more preferably 100 to 500 rpm for a treatment time of preferably 0.25 to 5 hours, more preferably 0.25 to 3 hours. In the case of using a bead mill in the pulverizing treatment, it is preferable to perform the pulverizing treatment using media having a media size of preferably $\phi$0.1 to $\phi$3 mm, more preferably $\phi$0.1 to $\phi$1 mm at a rotational speed of preferably 1000 to 10000 rpm, more preferably from 1000 to 5000 rpm for a treatment time of preferably 0.25 to 5 hours, more preferably 0.25 to 3 hours.

The aqueous dispersion of the sulfur-based vulcanizing agent is mixed in the latex composition according to the present invention in such an amount that the content of the sulfur-based vulcanizing agent is 0.1 to 1.0 part by weight, more preferably 0.1 to 0.8 parts by weight, still more preferably 0.1 to 0.6 parts by weight, particularly preferably 0.2 to 0.6 parts by weight with respect to 100 parts by weight of the conjugated diene polymer contained in the latex composition. The use of the aqueous dispersion of the sulfur-based vulcanizing agent in an amount within the aforementioned ranges results in a molded film, such as a dip-molded article, which can avoid delayed (Type IV) allergic reactions and has further enhanced tear strength. In the present invention, by adding the sulfur-based vulcanizing agent in the form of an aqueous dispersion using an anionic surfactant to the latex composition, sufficient mechanical strength and sufficient mechanical strength stability can be achieved even when the amount of the sulfur-based vulcanizing agent used is comparatively small.

The xanthogen compound used in the present invention can act as a vulcanization accelerator when used in combination with the sulfur-based vulcanizing agent. That is, in the case where a molded film, such as a dip-molded article, is formed by mixing the sulfur-based vulcanizing agent as an aqueous dispersion of the sulfur-based vulcanizing agent in the latex composition and vulcanizing the conjugated diene polymer in the latex composition by the action of the sulfur-based vulcanizing agent, the xanthogen compound acts as a vulcanization accelerator. Further, after vulcanization in which the xanthogen compound acts as a vulcanization accelerator in the latex composition mixed with the sulfur-based vulcanizing agent, the xanthogen compound is decomposed into, for example, alcohol and carbon disulfide, due to the heat applied during the vulcanization. For example, the xanthogen compound is decomposed into alcohol and carbon disulfide due to heat applied during the production of the molded film (heat at about 100 to 130°C in the vulcanization of the conjugated diene polymer), and then the components (such as alcohol and carbon disulfide) generated by the decomposition volatilize. As a result, the resulting molded film contains a reduced amount of residual xanthogen compound. Specifically, the latex composition according to the present invention contains the xanthogen compound as a vulcanization accelerator and is devoid of any conventional vulcanization accelerators (such as dithiocarbamate vulcanization accelerators and thiazole vulcanization accelerators) which trigger delayed (Type IV) allergic reactions, and can provide a molded film, such as a dip-molded article, containing a reduced amount of residual xanthogen compound. Therefore, the resulting molded film can avoid delayed (Type IV) allergic reactions.

Although the xanthogen compound is not specifically limited, examples thereof include xanthic acids, xanthates, xanthogen disulfides (compounds with two xanthic acid molecules bound via a sulfur atom or the like), xanthogen polysulfides (compounds with three or more xanthic acid molecules bound via sulfur atoms or the like), and the like.

Such xanthates are not specifically limited, and may be any compounds having a xanthate structure. Examples thereof include compounds represented by the general formula (ROC(=S)S)x-Z (where R represents a linear or branched hydrocarbon, Z represents a metal atom, and x represents a numerical value that matches the valence of Z and is

generally 1 to 4, preferably 2 to 4, particularly preferably 2).

Although xanthates represented by the general formula (ROC(=S)S)x-Z are not specifically limited, examples thereof include zinc dimethyl xanthate, zinc diethyl xanthate, zinc dipropyl xanthate, zinc diisopropyl xanthate, zinc dibutyl xanthate, zinc dipentyl xanthate, zinc dihexyl xanthate, zinc diheptyl xanthate, zinc dioctyl xanthate, zinc di(2-ethylhexyl) xanthate, zinc didecyl xanthate, zinc didodecyl xanthate, potassium dimethyl xanthate, potassium ethyl xanthate, potassium propyl xanthate, potassium isopropyl xanthate, potassium butyl xanthate, potassium pentyl xanthate, potassium hexyl xanthate, potassium heptyl xanthate, potassium octyl xanthate, potassium 2-ethylhexyl xanthate, potassium decyl xanthate, potassium dodecyl xanthate, sodium methyl xanthate, sodium ethyl xanthate, sodium propyl xanthate, sodium isopropyl xanthate, sodium butyl xanthate, sodium pentyl xanthate, sodium hexyl xanthate, sodium heptyl xanthate, sodium octyl xanthate, sodium 2-ethylhexyl xanthate, sodium decyl xanthate, sodium dodecyl xanthate, and the like. Among these, xanthates with x in the general formula (ROC(=S)S)x-Z being 2 or more are preferable, isopropyl xanthates and butyl xanthates are more preferable, and zinc diisopropyl xanthate and zinc dibutyl xanthate are particularly preferable. One of these xanthates may be used alone, or two or more of them may be used in combination.

Xanthogen disulfides are compounds with two xanthic acid molecules bound via sulfur atoms or the like. Examples thereof include, but are not specifically limited to, dimethyl xanthogen disulfide, diethyl xanthogen disulfide, diisopropyl xanthogen disulfide, dibutyl xanthogen disulfide, dimethyl xanthogen polysulfide, diethyl xanthogen polysulfide, diisopropyl xanthogen polysulfide, dibutyl xanthogen polysulfide, and the like. Among these, diisopropyl xanthogen disulfide and dibutyl xanthogen disulfide are preferable.

Xanthogen polysulfides are compounds with three or more xanthic acid molecules bound via sulfur atoms or the like, and examples thereof include xanthogen trisulfides with three xanthic acid molecules bound via sulfur, xanthogen tetrasulfides with four xanthic acid molecules bound via sulfur, xanthogen pentasulfides with five xanthic acid molecules bound via sulfur, and the like.

Among the xanthogen compounds listed above, xanthates are preferred, and zinc diisopropyl xanthate and zinc dibutyl xanthate are particularly preferred from the viewpoint of providing a molded film, such as a dip-molded article, having further enhanced tear strength.

Although the latex composition may contain one of these xanthogen compounds alone, the latex composition preferably contains a combination of two or more of them. For example, in the case where the latex composition contains a xanthic acid, the latex composition may contain two or more xanthogen compounds as a result of conversion of a portion of the xanthic acid to a salt form. Alternatively, a portion of the xanthic acid mixed in the latex composition may be present in the form of a xanthogen disulfide or a xanthogen polysulfide due to the action of the sulfur-based vulcanizing agent mixed in the latex composition. Likewise, also in the case where the latex composition contains a xanthate, a xanthogen disulfide, or a xanthogen polysulfide, these each may be present in the form of any one of a xanthic acid, a xanthate, a xanthogen disulfide, and a xanthogen polysulfide.

The amount of the xanthogen compound used (in the case where a plurality of xanthogen compounds is present, the total amount thereof) is preferably 0.01 to 10 parts by weight, more preferably 0.1 to 7 parts by weight, still more preferably 0.5 to 5 parts by weight, further more preferably 1 to 3 parts by weight with respect to 100 parts by weight of the conjugated diene polymer contained in the latex. The use of the xanthogen compound in an amount within the above ranges can result in a molded film, such as a dip-molded article, which can avoid delayed (Type IV) allergic reactions and has further enhanced tensile strength.

The xanthogen compound may be mixed with the conjugated diene polymer latex in any manner without limitation. One preferred example thereof is to mix the xanthogen compound with the conjugated diene polymer latex in the form of an aqueous dispersion in which the xanthogen compound is dispersed in water using a surfactant. Specifically, it is preferable that the xanthogen compound be dispersed in water using a surfactant to prepare an aqueous dispersion of the xanthogen compound, and the resulting aqueous dispersion of the xanthogen compound be then mixed with the conjugated diene polymer latex.

Examples of surfactants for use to disperse the xanthogen compound in water include, but are not limited to, nonionic surfactants, nonionic anionic surfactants, anionic surfactants, and the like. Among these, nonionic surfactants and nonionic anionic surfactants are preferably used from the viewpoint of forming a molded film, such as a dip-molded article, having further enhanced tensile strength from the resulting latex composition after long-term aging.

Examples of anionic surfactants for use to disperse the xanthogen compound in water include, but are not limited to, the same anionic surfactants as those which can be used in the aqueous dispersion of the sulfur-based vulcanizing agent to disperse the sulfur-based vulcanizing agent in water.

Any nonionic surfactant can be used without limitation to disperse the xanthogen compound in water as long as it has a segment capable of acting as a nonionic surfactant in the main chain of the molecule. Suitable examples of segments capable of acting as a nonionic surfactant include polyoxyalkylene structures.

Specific examples of nonionic surfactants include polyoxyalkylene glycols, polyoxyalkylene alkyl ethers, polyoxyalkylene alkyl phenyl ethers, polyoxyethylene styrenated phenyl ethers, polyoxyethylene (hydrogenated) castor oil, polyoxyethylene alkylamines, fatty acid alkanolamides, and the like.

Examples of polyoxyalkylene glycols include polyoxyethylene glycol, polyoxypropylene glycol, polyoxypropylene glycol ethylene oxide adducts such as polyoxyethylene polyoxypropylene glycol, and the like.

Examples of polyoxyalkylene alkyl ethers include linear or branched ethers to which 1 to 50 (preferably 1 to 10) of propylene oxide molecules and/or ethylene oxide molecules are added. Among these, linear or branched ethers to which 1 to 50 (preferably 1 to 10) of propylene oxide molecules are added, linear or branched ethers to which 1 to 50 (preferably 1 to 10) of ethylene oxide molecules are added, and linear or branched ethers to which 2 to 50 (preferably 2 to 10) of ethylene oxide molecules and propylene oxide molecules in total are added in a block or random manner may be mentioned. Examples of polyoxyalkylene alkyl ethers include polyoxyethylene oleyl ether, polyoxyethylene octyldodecyl ether, polyoxyethylene dodecyl ether, polyoxyethylene lauryl ether, and the like. Among these, preferred are polyoxyethylene oleyl ether and polyoxyethylene octyldodecyl ether.

Examples of polyoxyalkylene alkylphenyl ethers include compounds obtained by adding 1 to 50 (preferably 1 to 10) of propylene oxide molecules and/or ethylene oxide molecules to alkylphenols.

Examples of polyoxyethylene styrenated phenyl ethers include ethylene oxide adducts of (mono, di, and tri) styrenated phenols and the like. Among these, polyoxyethylene distyrenated phenyl ether is preferred, which is an ethylene oxide adduct of distyrenated phenol.

Examples of polyoxyethylene (hydrogenated) castor oil include ethylene oxide adducts of castor oil and hydrogenated castor oil.

Examples of fatty acid alkanolamides include lauric acid diethanolamide, palmitic acid diethanolamide, myristic acid diethanolamide, stearic acid diethanolamide, oleic acid diethanolamide, palm oil fatty acid diethanolamide, coconut oil fatty acid diethanolamide, and the like.

Among these nonionic surfactants, nonionic surfactants having a polyoxyalkylene structure are preferred, nonionic surfactants having a polyoxyethylene structure are more preferred, hydrocarbylated ethers of polyoxyethylene are more preferred, polyoxyethylene alkyl ethers and polyoxyethylene distyrenated phenyl ether are still more preferred, and polyoxyethylene distyrenated phenyl ether is particularly preferred. One of these nonionic surfactants may be used alone, or two or more of them may be used in combination.

Any nonionic anionic surfactant can be used without limitation to disperse the xanthogen compound in water as long as it has a segment capable of acting as a nonionic surfactant and a segment capable of acting as an anionic surfactant in the main chain of the molecule.

Examples of nonionic anionic surfactants include compounds represented by general formula (3) below.

$$R^4\text{-O-}(CR^5R^6CR^7R^8)_n\text{-}SO_3M \qquad (3)$$

(In general formula (3) above, $R^4$ is an alkyl group having 6 to 16 carbon atoms or an aryl group having 6 to 14 carbon atoms which may be substituted with an alkyl group having 1 to 25 carbon atoms; $R^5$ to $R^8$ are groups each independently selected from the group consisting of hydrogen and a methyl group; M is an alkali metal atom or an ammonium ion; and n is 3 to 40.)

Specific examples of compounds represented by general formula (3) include polyoxyethylene alkyl ether sulfates such as polyoxyethylene lauryl ether sulfate, polyoxyethylene cetyl ether sulfate, polyoxyethylene stearyl ether sulfate, and polyoxyethylene oleyl ether sulfate; polyoxyethylene aryl ether sulfates such as polyoxyethylene nonylphenyl ether sulfate, polyoxyethylene octylphenyl ether sulfate, and polyoxyethylene distyryl ether sulfate; and the like.

Among these nonionic anionic surfactants, nonionic anionic surfactants having a polyoxyalkylene structure are preferred, and nonionic anionic surfactants having a polyoxyethylene structure are more preferred. One of these nonionic anionic surfactants may be used alone, or two or more of them may be used in combination.

Although the content of the nonionic surfactant and/or the nonionic anionic surfactant in the aqueous dispersion of the xanthogen compound is not specifically limited, it is preferably 1 to 50 parts by weight, more preferably 3 to 30 parts by weight, still more preferably 5 to 20 parts by weight with respect to 100 parts by weight of the xanthogen compound. In the case where the nonionic surfactant and the nonionic anionic surfactant are used in combination, the total amount thereof preferably falls within the aforementioned ranges.

A preferable method for producing an aqueous dispersion of the xanthogen compound is to mix the xanthogen compound, the surfactant, and water, and then subject the resulting mixture to a pulverizing treatment. By way of examples of the pulverizing treatment, the same methods as those described above for the method for producing the aqueous dispersion of the sulfur-based vulcanizing agent can be mentioned.

The aqueous dispersion of the sulfur-based vulcanizing agent and the aqueous dispersion of the xanthogen compound can be added to the conjugated diene polymer latex in any manner without limitation. The aqueous dispersion of the sulfur-based vulcanizing agent and the aqueous dispersion of the xanthogen compound may be added in the stated order, or may be added simultaneously.

The latex composition according to the present invention may be prepared by adding an activating agent as needed to the above conjugated diene polymer latex in addition to the aqueous dispersion of the sulfur-based vulcanizing

agent and the xanthogen compound.

In the case where an activating agent is added to the latex composition, the activating agent as well as the xanthogen compound acts as a vulcanization accelerator when a molded film such as a dip-molded article is formed from the latex composition according to the present invention by vulcanizing the conjugated diene polymer in the latex composition by the action of the sulfur-based vulcanizing agent. Consequently, the resulting molded film (e.g., dip-molded article) has further enhanced tear strength.

Although such an activating agent is not particularly limited, a metal compound is preferably used to further enhance the tear strength of the resulting molded film (dip-molded article). Examples of such metal compounds include, but are not limited to, metal oxides, metal compounds having one or more carbon atoms, and the like. Any metal may be selected as a metal component of such metal compounds without limitation. Preferred is a typical metal (at least one element selected from the group consisting of the elements of Groups 1, 2, 12, 13, 14, 15, 16, 17, and 18). More preferred are the elements of Groups 2, 12, 13, and 14, still more preferred are zinc, magnesium, calcium, aluminum, and lead, particularly preferred are zinc, magnesium, and calcium, and most preferred is zinc. One of these metal compounds may be used alone, or two or more of them may be used in combination.

Although metal oxides are not particularly limited, zinc oxide, magnesium oxide, titanium oxide, calcium oxide, lead oxide, iron oxide, copper oxide, tin oxide, nickel oxide, chromium oxide, cobalt oxide, and aluminum oxide are preferred from the viewpoint of providing a molded film, such as a dip-molded article, having further enhanced tear strength. More preferred is zinc oxide.

Although metal compounds having one or more carbon atoms are not particularly limited, carbonates, hydrogen carbonates, hydroxides, and organic metal compounds are preferred from the viewpoint of providing a molded film, such as a dip-molded article, having further enhanced tear strength. More preferred are carbonates, hydrogen carbonates, and organic metal compounds. Among these, inorganic salts such as carbonates and hydrogen carbonates are particularly preferred from the viewpoint of high stability and high availability of the compounds.

The amount of the activating agent used is preferably 0.01 to 10 parts by weight, more preferably 0.1 to 5 parts by weight, still more preferably 1 to 3 parts by weight with respect to 100 parts by weight of the conjugated diene polymer contained in the latex composition. The use of the activating agent in an amount within the above ranges can result in a molded film, such as a dip-molded article, having further enhanced tear strength.

The activating agent can be added in any manner without limitation as long as the conjugated diene polymer latex and the activating agent are finally mixed.

Further, a vulcanization accelerator may be added to the latex composition as long as a molded film such as a dip-molded article formed from the latex composition can avoid delayed (Type IV) allergic reactions.

Examples of usable vulcanization accelerators include vulcanization accelerators conventionally used in dip molding, and examples thereof include dithiocarbamic acid compounds such as diethyldithiocarbamic acid, dibutyldithiocarbamic acid, di-2-ethylhexyldithiocarbamic acid, dicyclohexyldithiocarbamic acid, diphenyldithiocarbamic acid, and dibenzyldithiocarbamic acid, and zinc salts thereof; 2-mercaptobenzothiazole, zinc 2-mercaptobenzothiazole, 2-mercaptothiazoline, dibenzothiazyl disulfide, 2-(2,4-dinitrophenylthio)benzothiazole, 2-(N,N-diethylthiocarbaylthio)benzothiazole, 2-(2,6-dimethyl-4-morpholinothio)benzothiazole, 2-(4'-morpholinodithio)benzothiazole, 4-morpholinyl-2-benzothiazyl disulfide, 1,3-bis(2-benzothiazyl mercaptomethyl)urea, and the like. One of these vulcanization accelerators may be used alone, or two or more of them may be used in combination. From the viewpoint of providing a molded film, such as a dip-molded article, which is more likely to avoid delayed (Type IV) allergic reactions, the content of the xanthogen compound is preferably more than 50 wt%, more preferably 80 wt% or more, still more preferably 100 wt% of the total content of the xanthogen compound and the vulcanization accelerator.

The latex composition can further contain optional compounding agents including an antioxidant, a dispersant, a reinforcer such as carbon black, silica, or talc, a filler such as calcium carbonate or a clay, an ultraviolet absorber, and a plasticizer.

Examples of antioxidants include sulfur atom-free phenolic antioxidants such as 2,6-di-4-methylphenol, 2,6-di-t-butylphenol, butylhydroxyanisole, 2,6-di-t-butyl-α-dimethylamino-p-cresol, octadecyl-3-(3,5-di-t-butyl-4-hydroxyphenyl)propionate, styrenated phenol, 2,2'-methylene-bis(6-α-methyl-benzyl-p-cresol), 4,4'-methylenebis(2,6-di-t-butylphenol), 2,2'-methylene-bis(4-methyl-6-t-butylphenol), alkylated bisphenols, and a butylated reaction product of p-cresol with dicyclopentadiene; thiobisphenol antioxidants such as 2,2'-thiobis-(4-methyl-6-t-butylphenol), 4,4'-thiobis-(6-t-butyl-o-cresol), and 2,6-di-t-butyl-4-(4,6-bis(octylthio)-1,3,5-triazin-2-ylamino)phenol; phosphite ester antioxidants such as tris(nonylphenyl) phosphite, diphenylisodecyl phosphite, and tetraphenyl dipropylene glycol diphosphite; sulfur ester antioxidants such as dilauryl thiodipropionate; amine antioxidants such as phenyl-α-naphthylamine, phenyl-β-naphthylamine, p-(p-toluenesulfonylamide)-diphenylamine, 4,4'-(α,α-dimethylbenzyl)diphenylamine, N,N-diphenyl-p-phenylenediamine, N-isopropyl-N'-phenyl-p-phenylenediamine, and butyl aldehyde-aniline condensation products; quinoline antioxidants such as 6-ethoxy-2,2,4-trimethyl-1,2-dihydroquinoline; hydroquinone antioxidants such as 2,5-di-(t-amyl)hydroquinone; and the like. One of these antioxidants may be used alone, or two or more of them may be used in combination.

The content of such antioxidant(s) is preferably 0.05 to 10 parts by weight, more preferably 0.1 to 5 parts by

weight, still more preferably 1 to 3 parts by weight with respect to 100 parts by weight of the conjugated diene polymer.

These compounding agents can be mixed in the latex composition by any method without limitation. Examples thereof include a method involving preparing a composition containing the conjugated diene polymer latex, the sulfur-based vulcanizing agent, and the xanthogen compound as described above, and then mixing the optional compounding agents in the prepared latex composition using a dispersing machine such as a ball mill, a kneader, or a disperser. Some of the compounding agents may be added after aging (described later).

The solids content of the latex composition according to the present invention is preferably 10 to 60 wt%, more preferably 10 to 55 wt%.

In the present invention, from the viewpoint of providing a molded film, such as a dip-molded article, having sufficient mechanical properties, the latex composition according to the present invention is preferably subjected to aging (pre-crosslinking or pre-vulcanization) before being used for film formation such as dip molding. The time for aging (pre-vulcanization) is preferably 8 to 120 hours, more preferably 24 to 72 hours although not specifically limited thereto. The temperature during aging (pre-vulcanization) is preferably 20 to 40°C although not specifically limited thereto. After a predetermined time of aging (pre-vulcanization) before use, the latex composition according to the present invention may be successively formed into a film, for example, by dip molding while the conditions for aging (pre-vulcanization) are maintained (aging (pre-vulcanization) is continued). In this case, the aging (pre-vulcanization) time and the aging (pre-vulcanization) temperature may be controlled within the aforementioned ranges. In particular, since the sulfur-based vulcanizing agent is used in the form of an aqueous dispersion and the xanthogen compound is also mixed, the latex composition according to the present invention can provide a molded film having high mechanical strength such as tensile strength and tear strength and excellent mechanical strength stability.

<Molded film>

Although not specifically limited, the molded film according to the present invention is suitably a dip-molded article obtained by dip molding the latex composition according to the present invention. The dip molding is a method involving immersing a mold in the latex composition to deposit the composition on the surface of the mold, then pulling the mold out of the composition, and thereafter drying the composition deposited on the surface of the mold. The mold before the immersion in the latex composition may be preheated. Further, before the mold is immersed in the latex composition or after the mold is pulled out of the latex composition, a coagulant can be used as required.

Specific examples of how to use the coagulant include depositing the coagulant on the mold by immersing the mold in a coagulant solution before the immersion in the latex composition (anode coagulant dipping); immersing a mold on which the latex composition has been deposited in a coagulant solution (Teague coagulant dipping); and the like. The anode coagulant dipping is preferable in that a dip-molded article having less unevenness in thickness is obtained.

Specific examples of coagulants include water-soluble polyvalent metal salts including metal halides such as barium chloride, calcium chloride, magnesium chloride, zinc chloride, and aluminum chloride; nitrates such as barium nitrate, calcium nitrate, and zinc nitrate; acetates such as barium acetate, calcium acetate, and zinc acetate; and sulfates such as calcium sulfate, magnesium sulfate, and aluminum sulfate. Among these, calcium salts are preferable, and calcium nitrate is more preferable. One of these water-soluble polyvalent metal salts may be used alone, or two or more of them may be used in combination.

Such coagulants can be generally used as solutions in water, an alcohol, or a mixture thereof, and are preferably used in the form of aqueous solutions. Such aqueous solutions may further contain a water-soluble organic solvent such as methanol or ethanol, and a nonionic surfactant. Although the concentration of coagulant(s) varies depending on the type of the water-soluble polyvalent metal salt, the concentration is preferably 5 to 50 wt%, more preferably 10 to 30 wt%.

The mold after pulled out of the latex composition is generally heated to dry the deposit formed on the mold. The drying conditions may be appropriately selected.

Next, the dip-molded layer deposited on the mold is cross-linked by heating. The dip-molded layer can be cross-linked by heat treatment typically at a temperature of 80 to 150°C, preferably for 10 to 130 minutes. As a heating method, external heating methods using infrared rays or heated air or internal heating methods using high-frequency waves can be employed. Among these, external heating using heated air is preferable. Before the heat treatment, the dip-molded layer may be immersed in water, preferably hot water at 30 to 70°C for about 1 to 60 minutes to remove water-soluble impurities (such as excess emulsifier and coagulant). Although the removal of water-soluble impurities may be performed after the heat treatment of the dip-molded layer, the removal process is preferably performed before the heat treatment to more efficiently remove the water-soluble impurities.

Then, a dip-molded article is obtained by detaching the dip-molded layer from the mold for dip molding. As a detaching method, a method of peeling the film from the mold by hand or a method of peeling the film by water pressure or pressure of compressed air can be employed. After the detachment, heat treatment at a temperature of 60 to 120°C for 10 to 120 minutes may be further performed.

The thickness of the dip-molded article is preferably 0.03 to 0.50 mm, more preferably 0.05 to 0.40 mm,

particularly preferably 0.08 to 0.30 mm.

The dip-molded article according to the present invention is formed using the latex composition described above, and therefore can avoid delayed (Type IV) allergic reactions and has excellent mechanical strength such as tensile strength and tear strength and excellent mechanical strength stability. For this reason, the dip-molded article can be used particularly suitably as a glove, for example. In the case where the molded film is a glove, inorganic fine particles made of talc, calcium carbonate, or the like or organic fine particles such as starch particles may be spread on the surface of the glove, an elastomer layer containing fine particles may be formed on the surface of the glove, or the surface layer of the glove may be chlorinated in order to prevent the adhesion of contacting parts of the molded film and allow the glove to be put on and taken off more smoothly.

Further, other than the aforementioned glove, the dip-molded article according to the present invention can be used as medical supplies such as baby bottle nipples, droppers, tubes, water pillows, balloon stalls, catheters, and condoms; toys such as balloons, dolls, and balls; industrial supplies such as pressure molding bags and gas storage bags; fingerstalls; and the like.

<Adhesive composition>

In the present invention, the latex composition according to the present invention described above can be used as an adhesive composition.

The content of the latex composition according to the present invention (solids content) in the adhesive composition is preferably 5 to 60 wt%, more preferably 10 to 30 wt%.

The adhesive composition preferably contains an adhesive resin in addition to the latex composition according to the present invention. Suitable examples of such adhesive resins include, but are not limited to, resorcinol-formaldehyde resins, melamine resins, epoxy resins, and isocyanate resins. Among these, resorcinol-formaldehyde resins are preferable. Examples of resorcinol-formaldehyde resins include known resorcinol-formaldehyde resins (such as those disclosed in Japanese Patent Application Laid-Open No. 55-142635). The reaction ratio between resorcinol and formaldehyde is typically 1:1 to 1:5, preferably 1:1 to 1:3 as a molar ratio of "resorcinol:formaldehyde".

In order to further enhance the adhesive strength of the adhesive composition, the adhesive composition may contain conventionally used compounds such as 2,6-bis(2,4-dihydroxyphenylmethyl)-4-chlorophenol or an analog thereof, an isocyanate, a blocked isocyanate, ethylene urea, polyepoxide, and modified polyvinyl chloride resin.

Further, the adhesive composition may contain a crosslinking aid. The presence of a crosslinking aid enables formation of a composite (described later) having enhanced mechanical strength using the adhesive composition. Examples of such crosslinking aids include quinone dioximes such as p-quinone dioxime; methacrylic acid esters such as lauryl methacrylate and methyl methacrylate; allyl compounds such as DAF (diallyl fumarate), DAP (diallyl phthalate), TAC (triallyl cyanurate), and TAIC (triallyl isocyanurate); maleimide compounds such as bismaleimide, phenylmaleimide, and N,N-m-phenylenedimaleimide; sulfur; and the like.

By using the adhesive composition according to the present invention, a substrate with an adhesive layer can be obtained. Such a substrate with an adhesive layer can be obtained by forming an adhesive layer on a surface of a substrate using the adhesive composition according to the present invention.

Although the substrate is not specifically limited, a fiber substrate can be used, for example. The type of fibers constituting the fiber substrate is not specifically limited, and examples thereof include vinylon fibers, polyester fibers, polyamide fibers such as nylon and aramid (aromatic polyamide), glass fibers, cotton, rayon, and the like. An appropriate selection can be made from these according to the intended use. The shape of the fiber substrate is not specifically limited. Examples thereof can include shapes of staples, filaments, cords, ropes, woven fabrics (such as canvas), and the like, and an appropriate one can be selected according to the intended use. For example, the substrate with an adhesive layer can be used as a substrate-rubber composite by bonding to a rubber via the adhesive layer. Examples of such substrate-rubber composites include, but are not limited to, toothed rubber belts with a core including a cord-shaped fiber substrate, toothed rubber belts including a fiber substrate in the form of a base fabric such as a canvas, and the like.

Although any method for obtaining the substrate-rubber composite can be used without limitation, examples thereof include a method involving depositing the adhesive composition on the substrate by immersion and the like to provide a substrate with an adhesive layer, and placing the substrate with an adhesive layer on a rubber, followed by heating and pressurization. The pressurization can be performed using a compression (press) molding machine, a metal roll, an injection molding machine, or the like. The pressure for the pressurization is preferably 0.5 to 20 MPa, more preferably 2 to 10 MPa. The heating temperature is preferably 130 to 300°C, more preferably 150 to 250°C. The heating and pressurization time is preferably 1 to 180 minutes, more preferably 5 to 120 minutes. This method involving heating and pressurization enables molding of the rubber and adhesion between the substrate with an adhesive layer and the rubber to be performed simultaneously. A mold for imparting a desired surface shape to the rubber of the substrate-rubber composite is preferably formed on the inner surface of the mold of the compressor or the surface of the roll used

for the pressurization.

Further, one aspect of the substrate-rubber composite can include a substrate-rubber-substrate composite. Such a substrate-rubber-substrate composite can be formed, for example, by combining a substrate (which may be a composite of two or more substrates) with the substrate-rubber composite. Specifically, a core serving as a substrate, a rubber, and a base fabric serving as a substrate are layered (note that the adhesive composition has been appropriately applied to the core and the base fabric to form substrates with an adhesive layer), followed by pressurization under heating, so that a substrate-rubber-substrate composite can be obtained.

The substrate-rubber composite obtained using the substrate with an adhesive layer has excellent mechanical strength derived from the use of the latex composition according to the present invention, and therefore can be suitably used as a belt such as a flat belt, a V belt, a V-ribbed belt, a round belt, a square belt, or a toothed belt. Further, such a substrate-rubber composite obtained using the substrate with an adhesive layer has excellent oil resistance, and therefore can be suitably used as an in-oil belt. Additionally, the substrate-rubber composite obtained using the substrate with an adhesive layer can also be suitably used for hoses, tubes, diaphragms, and the like. Examples of such hoses include single-tube rubber hoses, multilayer rubber hoses, braided reinforced hoses, fabric-wrapped reinforced hoses, and the like. Examples of such diaphragms include flat diaphragms, rolling diaphragms, and the like.

Other examples of applications of the substrate-rubber composite obtained using the substrate with an adhesive include industrial products such as seals and rubber rolls in addition to the aforementioned applications. Examples of seals include seals for moving parts such as rotating, swinging, and reciprocating parts and seals for fixed parts. Examples of seals for moving parts include oil seals, piston seals, mechanical seals, boots, dust covers, diaphragms, accumulators, and the like. Examples of seals for fixed parts include o-rings, various gaskets, and the like. Examples of rubber rolls include rolls that are parts of OA equipment such as printers and copiers; fiber processing rolls such as stretching rolls for spinning and draft rolls for spinning; steel rolls such as bridle rolls, snubber rolls, and steering rolls; and the like.

## EXAMPLES

Hereinafter, the present invention will be specifically described with reference to Examples. However, the present invention is not limited to these examples. The "part(s)" below is on a weight basis unless otherwise specified. The physical properties were measured as follows.

<Solids content>

From each sample, 2 g (weight: X2) was accurately weighed on an aluminum dish (weight: X1), followed by drying in a hot air dryer at 105°C for 2 hours. Subsequently, after cooling in a desiccator, the weight thereof (weight: X3) including the aluminum dish was measured to calculate the solids content according to the following calculation formula.

$$\text{Solids content (wt\%)} = (X3 - X1) \times 100/X2$$

<Degree of modification of carboxy-modified synthetic polyisoprene>

The number of carboxyl groups in the carboxy-modified synthetic polyisoprene contained in each carboxy-modified synthetic polyisoprene latex was determined by neutralization titration of the carboxy-modified synthetic polyisoprene in the carboxy-modified synthetic polyisoprene latex using a sodium hydroxide aqueous solution. Then, the degree of modification with a monomer having a carboxyl group was determined using the formula below based on the determined number of carboxyl groups.

$$\text{Degree of modification (wt\%)} = (X/Y) \times 100$$

In the formula, X represents the weight of units of the monomer having a carboxyl group in the carboxy-modified synthetic polyisoprene, and Y represents the weight of the carboxy-modified synthetic polyisoprene.

<Tensile stress at 500% elongation, tensile strength, and tensile elongation of dip-molded article>

In accordance with ASTM D412, each dip-molded article was punched out using a dumbbell (trade name "SUPER DUMBBELL (type: SEMK-100C)" available from DUMBBELL CO., LTD.) to produce a test piece for tensile strength measurement. The test piece was stretched at a stretching speed of 500 mm/min using a TENSILON Universal Material Testing Instrument (trade name "RTG-1210", available from ORIENTEC CORPORATION) to measure tensile

stress (unit: MPa) at 500% elongation, tensile strength immediately before break (unit: MPa) and tensile elongation immediately before break (unit: %). A dip-molded article with a lower value of tensile stress at 500% elongation is considered as having a softer texture, and a dip-molded article with a higher tensile strength is considered as having higher mechanical strength.

The measurements of the tensile stress at 500% elongation and the tensile elongation of dip-molded articles were performed on dip-molded articles subjected to 48-hour aging (pre-vulcanization). The measurement of the tensile strength of dip-molded articles was performed on dip-molded articles subjected to 48-hour aging (pre-vulcanization) and dip-molded articles subjected to 96-hour aging (pre-vulcanization).

<Change ratio of tensile strength of dip-molded article>

The change ratio of tensile strength was calculated based on the formula below from the tensile strength of each dip-molded article subjected to 48-hour aging (pre-vulcanization) and the tensile strength of the corresponding dip-molded article subjected to 96-hour aging (pre-vulcanization), which were measured as described above. It can be considered that the smaller the change ratio of tensile strength, the higher the stability of tensile strength.

Change ratio (%) of tensile strength = {(tensile strength of dip-molded article subjected to 96-hour aging (pre-vulcanization)/(tensile strength of dip-molded article subjected to 48-hour aging (pre-vulcanization))} × 100

<Tear strength of dip-molded article>

In accordance with ASTM D624-00, each dip-molded article was allowed to stand still in a constant-temperature, constant-humidity room at 23°C and at a relative humidity of 50% for 24 hours or more, and then was punched out using a dumbbell (trade name "Die C", available from DUMBBELL CO., LTD.) to prepare a test piece for tear strength measurement. The test piece was stretched at a stretching speed of 500 mm/min using a TENSILON Universal Material Testing Instrument (trade name "RTG-1210", available from A&D Company, Limited) to measure tear strength (unit: N/mm) . A dip-molded article with a higher tear strength is considered as having higher mechanical strength. The measurement of the tear strength of dip-molded articles was performed on dip-molded articles subjected to 48-hour aging (pre-vulcanization) and dip-molded articles subjected to 96-hour aging (pre-vulcanization).

<Example 1>

(Production of carboxy-modified synthetic polyisoprene (A-1) latex)

Synthetic polyisoprene (trade name "NIPOL IR2200L", available from Zeon Corporation) was mixed with n-hexane (boiling point: 69°C), and was dissolved therein by heating to 60°C with stirring to prepare an n-hexane solution (a) of the synthetic polyisoprene having a synthetic polyisoprene concentration of 15 wt%.

Meanwhile, potassium rosinate was added to water, and was dissolved therein by heating to 60°C. Thus, an emulsifier aqueous solution (b) (concentration: 1.5 wt%) was prepared.

Next, the n-hexane solution (a) of the synthetic polyisoprene and the emulsifier aqueous solution (b) prepared above were mixed using a mixer (trade name "Multi Line mixer MS26-MMR-5.5L", available from SATAKE CHEMICAL EQUIPMENT MFG., LTD.) in such proportions that the amount of potassium rosinate in the emulsifier aqueous solution (b) was 10 parts with respect to 100 parts of the synthetic polyisoprene in the n-hexane solution (a) of the synthetic polyisoprene. The mixture was then mixed and emulsified at a rotational speed of 4100 rpm using an emulsifying apparatus (trade name "MILDER MDN310", available from Pacific Machinery & Engineering Co., Ltd.) to give an emulsified dispersion (c). In this process, the total feed flow rate of the n-hexane solution (a) of the synthetic polyisoprene and the emulsifier aqueous solution (b) was controlled at 2,000 kg/hr, the temperature was controlled at 60°C, and the back pressure (gauge pressure) was controlled at 0.5 MPa.

Subsequently, the emulsified dispersion (c) was heated to 80°C under a reduced pressure of -0.01 to -0.09 MPa (gauge pressure) to distill off n-hexane and afford an aqueous dispersion (d) of the synthetic polyisoprene. In this process, a defoamer (trade name "SM5515", available from Dow Corning Toray Co., Ltd.) was continuously added by spraying the defoamer in an amount of 300 ppm by weight with respect to the synthetic polyisoprene in the emulsified

dispersion (c). In the process of distilling off n-hexane, the emulsified dispersion (c) was adjusted to 70 vol% or less of the tank volume, and was gradually stirred at 60 rpm using a three-bladed inclined paddle as a stirring blade.

After the completion of distilling off of n-hexane, the aqueous dispersion (d) of the synthetic polyisoprene obtained was concentrated by centrifugation at 8,000 to 9,000 G using a continuous centrifuge (trade name "SRG510", available from Alfa Laval AB) to give a synthetic polyisoprene latex (e) with a solids content of 60 wt% as a light liquid. The conditions for centrifugation were as follows: the solids content of the aqueous dispersion (d) before centrifugation was 8 wt%; the flow rate during continuous centrifugation was 1300 kg/hr; and the back pressure (gauge pressure) of the centrifuge was 0.1 MPa.

Subsequently, after dilution with 130 parts of distilled water with respect to 100 parts of the synthetic polyisoprene in the synthetic polyisoprene latex (e) thus obtained, a solution of 0.8 parts (with respect to 100 parts of the synthetic polyisoprene) of a sodium salt of a condensation product of β-naphthalene sulfonic acid and formalin (trade name "DEMOL T-45", available from Kao Corporation) as a dispersant diluted with 4 parts (with respect to 100 parts of the synthetic polyisoprene) of distilled water was added to the synthetic polyisoprene latex (e) over 5 minutes. Next, the synthetic polyisoprene latex (e) containing the dispersant was fed into a nitrogen-purged reactor provided with a stirrer, and was warmed to 30°C with stirring. In another reactor, a diluted solution of methacrylic acid was prepared by mixing 3 parts of methacrylic acid as a carboxyl group-containing compound and 16 parts of distilled water. The diluted solution of methacrylic acid was added over 30 minutes to the reactor controlled at 20°C.

Further, a solution (f) composed of 7 parts of distilled water, 0.32 parts of sodium formaldehyde sulfoxylate (trade name "SFS", available from MITSUBISHI GAS CHEMICAL COMPANY, INC.), and 0.01 parts of ferrous sulfate (trade name "Frost Fe", available from CHELEST CORPORATION) was prepared in another reactor. After the solution (f) was transferred to the former reactor, 0.5 parts of 1,1,3,3-tetramethylbutyl hydroperoxide (trade name "PEROCTA H", available from NOF CORPORATION) was added thereto to allow the contents to react at 20°C for 1 hour, followed by concentration in a centrifuge to yield a carboxy-modified synthetic polyisoprene (A-1) latex. The resulting carboxy-modified synthetic polyisoprene (A-1) latex was measured for degree of modification in accordance with the method described above to give a degree of modification of 0.5 mol%.

(Preparation of aqueous dispersion of sulfur)

0.5 parts of sulfur, 0.03 parts (6.0 parts with respect to 100 parts of sulfur) of a sodium salt of a condensation product of β-naphthalene sulfonic acid and formalin (trade name "DEMOL T-45", available from Kao Corporation) as an anionic surfactant, 0.004 parts of a 5% potassium hydroxide aqueous solution, and 0.42 parts of water were pulverized by mixing with a ball mill (trade name "porcelain ball mill", available from NITTO KAGAKU CO., Ltd) to prepare an aqueous dispersion of sulfur. The conditions used for mixing with the ball mill were as follows: ϕ10 mm to ϕ35 mm ceramic porcelain balls (a mixture of ϕ10 mm, ϕ15 mm, ϕ20 mm, ϕ25 mm, and ϕ35 mm ceramic porcelain balls) were used, and the mixing was performed at 50 rpm for 72 hours.

(Preparation of aqueous dispersion of xanthogen compound)

2.5 parts of zinc diisopropyl xanthate (trade name "Nocceler ZIX", available from OUCHI SHINKO CHEMICAL INDUSTRIAL CO., LTD., volume average particle size: 14 pm, 95% volume-based cumulative particle size (D95): 55 pm) as a xanthogen compound, 0.45 parts (18.0 parts relative to 100 parts of zinc diisopropyl xanthate) of polyoxyethylene distyrenated phenyl ether (trade name "EMULGEN A-60", available from Kao Corporation) as a nonionic surfactant, and 2.05 parts of water were pulverized by mixing with a ball mill (trade name "porcelain ball mill", available from NITTO KAGAKU CO., Ltd.) to prepare an aqueous dispersion of the xanthogen compound. The conditions used for mixing with the ball mill were as follows: ϕ10 mm to ϕ35 mm ceramic porcelain balls (a mixture of ϕ10 mm, ϕ15 mm, ϕ20 mm, ϕ25 mm, and ϕ35 mm ceramic porcelain balls) were used, and the mixing was performed at 50 rpm for 72 hours.

(Preparation of latex composition)

While the carboxy-modified conjugated polyisoprene (A-1) latex prepared above was being stirred, 0.5 parts (on a sulfur basis) of the aqueous dispersion of sulfur and 2.5 parts (on a zinc diisopropyl xanthate basis) of the aqueous dispersion of the xanthogen compound prepared above were added with respect to 100 parts of the carboxy-modified conjugated polyisoprene (A-1) in the carboxy-modified conjugated polyisoprene (A-1) latex.

On a solids content basis with respect to 100 parts of the carboxy-modified conjugated polyisoprene (A-1) in the resulting mixture, 1.5 parts of zinc oxide as an activating agent and 2 parts of an antioxidant agent (trade name "Wingstay L", available from Goodyear Tire and Rubber Company) were added as aqueous dispersions of the compounding agents to the mixture under stirring, thereby affording a latex composition. The resulting latex composition was divided into two halves. One of them was aged (pre-vulcanized) for 48 hours in a temperature-constant water tank

controlled at 25°C, and the other was aged (pre-vulcanized) for 96 hours in a temperature-constant water tank controlled at 25°C to prepare a 48-hour aged latex composition and a 96-hour aged latex composition.

(Production of dip-molded article)

A commercially available ceramic hand mold (available from SHINKO CERAMICS CO., LTD.) was washed, followed by preheating in an oven at 70°C. Thereafter, the hand mold was immersed in a coagulant aqueous solution containing 18 wt% of calcium nitrate and 0.05 wt% of polyoxyethylene lauryl ether (trade name "EMULGEN 109P", available from Kao Corporation) for 5 seconds, and was taken out of the coagulant aqueous solution. Subsequently, the hand mold was dried in an oven at 70°C for 30 minutes or more, thereby allowing the coagulant to deposit on the hand mold, so that the hand mold was coated with the coagulant.

Thereafter, the hand mold coated with the coagulant was taken out of the oven, and was immersed for 10 seconds in the 48-hour aged latex composition prepared above. Subsequently, the hand mold was air-dried at room temperature for 10 minutes, and was immersed in hot water at 60°C for 5 minutes to elute water-soluble impurities, thereby forming a dip-molded layer on the hand mold. Thereafter, the dip-molded layer formed on the hand mold was vulcanized by heating in an oven at 130°C for 30 minutes, followed by cooling to room temperature, and was separated from the hand mold after spreading talc to obtain a glove-shaped dip-molded article (48-hour aged article). Additionally, a glove-shaped dip-molded article (96-hour aged article) was prepared in the same manner as described above except that the 96-hour aged latex composition was used instead of the 48-hour latex composition. The dip-molded articles (48-hour aged article and 96-hour aged article) obtained were evaluated for tensile stress at 500% elongation, tensile strength, tensile elongation, and tear strength according to the above methods. The results are shown in Table 1.

<Example 2>

A latex composition was prepared in the same manner as in Example 1 except that the amount of the aqueous dispersion of sulfur added was changed to 1.0 part on a sulfur basis. Then, dip-molded articles (48-hour aged article and 96-hour aged article) were also prepared in the same manner as in Example 1, and were likewise evaluated. The results are shown in Table 1.

<Example 3>

An aqueous dispersion of a xanthogen compound was prepared in the same manner as in Example 2 except that 0.3 parts (12.0 parts with respect to 100 parts of zinc diisopropyl xanthate) of a polyoxyethylene alkyl ether sulfate (trade name "Alscope NS-230", available from TOHO Chemical Industry Co., Ltd.) as a nonionic anionic surfactant was used instead of polyoxyethylene distyrenated phenyl ether as a nonionic surfactant, and a latex composition was prepared in the same manner as in Example 2. Then, dip-molded articles (48-hour aged article and 96-hour aged article) were prepared in the same manner as in Example 2, and were likewise evaluated. The results are shown in Table 1.

<Example 4>

An aqueous dispersion of a xanthogen compound was prepared in the same manner as in Example 2 except that 0.15 parts (6 parts with respect to 100 parts of zinc diisopropyl xanthate) of a sodium salt of a condensation product of β-naphthalene sulfonic acid and formalin (trade name "DEMOL T-45", available from Kao Corporation) as an anionic surfactant was used instead of polyoxyethylene distyrenated phenyl ether as a nonionic surfactant, and a latex composition was prepared in the same manner as in Example 2. Then, dip-molded articles (48-hour aged article and 96-hour aged article) were prepared in the same manner as in Example 2, and were likewise evaluated. The results are shown in Table 1.

<Example 5>

A latex composition was prepared in the same manner as in Example 4 except that the amount of the aqueous dispersion of sulfur added was changed to 0.3 parts on a sulfur basis. Then, dip-molded articles (48-hour aged article and 96-hour aged article) were also prepared in the same manner as in Example 4, and were likewise evaluated. The results are shown in Table 1.

<Example 6>

A latex composition was prepared in the same manner as in Example 4 except that the amount of the aqueous

dispersion of sulfur added was changed to 0.1 parts on a sulfur basis. Then, dip-molded articles (48-hour aged article and 96-hour aged article) were also prepared in the same manner as in Example 4, and were likewise evaluated. The results are shown in Table 1.

<Comparative Example 1>

A latex composition was prepared in the same manner as in Example 4 except that 0.5 parts of sulfur in the form of powder was added to the carboxy-modified synthetic polyisoprene (A-1) latex instead of the aqueous dispersion of sulfur. Then, dip-molded articles (48-hour aged article and 96-hour aged article) were also prepared in the same manner as in Example 4, and were likewise evaluated. The results are shown in Table 1.

<Comparative Example 2>

An aqueous dispersion of vulcanization accelerators was prepared in the same manner as in Comparative Example 1 except that 0.3 parts of zinc diethyldithiocarbamate (trade name "Nocceler EZ", available from OUCHI SHINKO CHEMICAL INDUSTRIAL CO., LTD.), 0.5 parts of zinc dibutyldithiocarbamate (trade name "Nocceler BZ-P", available from OUCHI SHINKO CHEMICAL INDUSTRIAL CO., LTD.), and 0.7 parts of zinc 2-mercaptobenzothiazole (trade name "Nocceler MZ", available from OUCHI SHINKO CHEMICAL INDUSTRIAL CO., LTD.) were used instead of zinc diisopropyl xanthate as a xanthogen compound, and a latex composition was prepared in the same manner as in Comparative Example 1. Then, dip-molded articles (48-hour aged article and 96-hour aged article) were also prepared in the same manner as in Comparative Example 1, and were likewise evaluated. The results are shown in Table 1.

<Comparative Example 3>

A latex composition was prepared in the same manner as in Example 1 except that the aqueous dispersion of vulcanization accelerators prepared in Comparative Example 2 was used instead of the aqueous dispersion of the xanthogen compound. Dip-molded articles (48-hour aged article and 96-hour aged article) were also prepared in the same manner as in Example 1, and were likewise evaluated. The results are shown in Table 1.

<Comparative Example 4>

A latex composition was prepared in the same manner as in Comparative Example 3 except that the amount of the aqueous dispersion of sulfur added was changed to 1.5 parts on a sulfur basis. Then, dip-molded articles (48-hour aged article and 96-hour aged article) were also prepared in the same manner as in Comparative Example 3, and were likewise evaluated. The results are shown in Table 1.

[Table 1]

Table 1

| | | | Example | | | | | | Comparative Example | | | |
|---|---|---|---|---|---|---|---|---|---|---|---|---|
| | | | 1 | 2 | 3 | 4 | 5 | 6 | 1 | 2 | 3 | 4 |
| Composition | | | | | | | | | | | | |
| Carboxy-modited synthetic polyisoprene (A-1) | | (parts) | 100 | 100 | 100 | 100 | 100 | 100 | 100 | 100 | 100 | 100 |
| Aqueous dispersion of sulfur | Sulfur | (parts) | 0.5 | 1.0 | 1.0 | 1.0 | 0.3 | 0.1 | - | - | 0.5 | 1.5 |
| | Sodium salt of condensation product of β-naphthalene sulfonic acid and formalin | (parts) | 0.03 | 0.06 | 0.06 | 0.06 | 0.018 | 0.006 | - | - | 0.03 | 0.09 |
| Sulfur powder | | (parts) | - | - | - | - | - | - | 0.5 | 0.5 | - | - |
| Aqueous dispersion of vticanization accelerator | Zinc diisopropyl xanthate | (parts) | 2.5 | 2.5 | 2.5 | 2.5 | 2.5 | 2.5 | 2.5 | - | - | - |
| | Zinc diethyldithiocarbamate | (parts) | - | - | - | - | - | - | - | 0.3 | 0.3 | 0.3 |
| | Zinc dibutyldithiocarbamate | (parts) | - | - | - | - | - | - | - | 0.5 | 0.5 | 0.5 |
| | Zinc 2-mercaptobenzothiazole | (parts) | - | - | - | - | - | - | - | 0.7 | 0.7 | 0.7 |
| | Polyoxyethylene distyrenated phenyl ether | (parts) | 0.45 | 0.45 | - | | -- | -- | | - | - | - |
| | Polyoxyethylene alkyl ether sulfate | (parts) | - | - | 0.3 | - | - | - | - | - | - | - |
| | Sodium salt of condensation product of β-naphthalene sulfonic acid and formalin | (parts) | - | - | - | 0.15 | 0.15 | 0.15 | 0.15 | 0.15 | 0.15 | 0.15 |
| Zinc oxide | | (parts) | 1.5 | 1.5 | 1.5 | 1.5 | 1.5 | 1.5 | 1.5 | 1.5 | 1.5 | 1.5 |
| Evaluations of dip-molded aricle (48-hour aged article) | | | | | | | | | | | | |
| Tensile stress at 500% of 48-hour aged article | | (MPa) | 2.1 | 2.4 | 2.4 | 2.3 | 2.1 | 1.8 | 1.1 | 1.2 | 1.9 | 2.0 |
| Tensile strength of 48-hour aged article | | (MPa) | 31.1 | 26.2 | 24.8 | 25.9 | 28.6 | 20.2 | 7.2 | 7.5 | 21.2 | 238 |
| Tensile elongation of 48-hour aged article | | (%) | 1055 | 981 | 922 | 890 | 1023 | 1160 | 925 | 934 | 888 | 910 |
| Tear strength of 48-hour aged article | | (N/mm) | 51.7 | 41.3 | 39.8 | 43.5 | 48.8 | 51.8 | 10.2 | 11.1 | 25.4 | 30.3 |
| Evaluations of dip-molded aricle (96-hour aged article) | | | | | | | | | | | | |
| Tensile strength of 96-hour aged article | | (MPa) | 30.8 | 25.2 | 23.0 | 22.4 | 28.1 | 22.4 | 7.0 | 7.3 | 16.2 | 21.2 |
| Change ratio of tensile strength | | (%) | 99.0 | 96.2 | 92.7 | 86.5 | 98.3 | 110.9 | 97.2 | 97.3 | 76.4 | 89.1 |

As shown in Table 1, good tensile stress and high mechanical strength could be achieved by the latex compositions each prepared by adding a xanthogen compound and an aqueous dispersion of sulfur dispersed in water using an anionic surfactant to a conjugated diene polymer latex. Additionally, high change ratios of tensile strength were observed, which indicates that they ensure excellent mechanical strength stability (Examples 1 to 6). Furthermore, because the latex compositions were devoid of any vulcanization accelerators which may trigger delayed (Type IV) allergic reactions, it is presumed that the dip-molded articles formed therefrom can also avoid delayed (Type IV) allergic reactions.

On the other hand, the latex compositions prepared using sulfur in the form of powder instead of an aqueous dispersion thereof provided dip-molded articles having poor mechanical strength (Comparative Examples 1 and 2).

The latex compositions containing vulcanization accelerators other than xanthogen compounds also provided dip-molded articles having poor mechanical strength (Comparative Examples 3 and 4).

## Claims

1. A latex composition comprising an aqueous dispersion of a sulfur-based vulcanizing agent and a xanthogen compound mixed with a conjugated diene polymer latex, the aqueous dispersion of a sulfur-based vulcanizing agent being a dispersion in which the sulfur-based vulcanizing agent is dispersed in water using an anionic surfactant.

2. The latex composition according to claim 1, wherein the amount of the sulfur-based vulcanizing agent present is 0.1 to 1.0 part by weight with respect to 100 parts by weight of the conjugated diene polymer contained in the conjugated diene polymer latex.

3. The latex composition according to claim 2, wherein the amount of the sulfur-based vulcanizing agent present is 0.1 to 0.6 parts by weight with respect to 100 parts by weight of the conjugated diene polymer contained in the conjugated diene polymer latex.

4. The latex composition according to any one of claims 1 to 3, wherein the xanthogen compound is mixed with the conjugated diene polymer latex in the form of an aqueous dispersion in which the xanthogen compound is dispersed in water using at least one of a nonionic surfactant and a nonionic anionic surfactant.

5. The latex composition according to any one of claims 1 to 4, wherein the conjugated diene polymer latex is a synthetic polyisoprene latex, a styrene-isoprene-styrene block copolymer latex, a protein-free natural rubber latex, or a nitrile group-containing conjugated diene polymer latex.

6. The latex composition according to any one of claims 1 to 5, wherein the conjugated diene polymer latex is a carboxy-modified conjugated diene polymer latex.

7. A molded film formed from the latex composition according to any one of claims 1 to 6.

8. A dip-molded article formed by dip molding the latex composition according to any one of claims 1 to 6.

9. An adhesive composition formed from the latex composition according to any one of claims 1 to 6.

**INTERNATIONAL SEARCH REPORT**

International application No.
PCT/JP2021/004673

A. CLASSIFICATION OF SUBJECT MATTER
Int.Cl. C08L9/10(2006.01)i, B29C41/14(2006.01)i, C08K3/30(2006.01)i, C08K5/36(2006.01)i, C08K5/38(2006.01)i, C08K5/42(2006.01)i, C08L13/02(2006.01)i, C08L71/00(2006.01)i, C09J11/04(2006.01)i, C09J11/06(2006.01)i, C09J109/04(2006.01)i, B29K9/00(2006.01)n
FI: C08L9/10, C08K5/36, C08L13/02, B29C41/14, C09J109/04, C09J11/04, C09J11/06, C08K3/30, C08K5/38, C08K5/42, C08L71/00, B29K9:00
According to International Patent Classification (IPC) or to both national classification and IPC

B. FIELDS SEARCHED
Minimum documentation searched (classification system followed by classification symbols)
Int.Cl. C08L9/10, B29C41/14, C08K3/30, C08K5/36, C08K5/38, C08K5/42, C08L13/02, C08L71/00, C09J11/04, C09J11/06, C09J109/04, B29K9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2019/003744 A1 (ZEON CORPORATION) 01 January 2019 (2019-01-01) | 1-9 |
| A | WO 2018/155243 A1 (ZEON CORPORATION) 30 August 2018 (2018-08-30) | 1-9 |
| A | JP 2012-158694 A (DENKI KAGAKU KOGYO KK) 23 August 2012 (2012-08-23) | 1-9 |
| A | WO 2018/143159 A1 (DENKA CO., LTD.) 09 August 2018 (2018-08-09) | 1-9 |
| A | JP 2001-310976 A (TAKEDA PHARMACEUTICAL COMPANY LIMITED) 06 November 2001 (2001-11-06) | 1-9 |
| P, A | WO 2020/054248 A1 (ZEON CORPORATION) 19 March 2020 (2020-03-19) | 1-9 |

☐ Further documents are listed in the continuation of Box C.　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 March 2021 | 06 April 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/004673

| | | |
|---|---|---|
| WO 2019/003744 A1 | 01 January 2019 | (Family: none) |
| WO 2018/155243 A1 | 30 August 2018 | US 2020/0056019 A1<br>EP 3587487 A1 |
| JP 2012-158694 A | 23 August 2012 | CN 102627926 A<br>TW 201233748 A |
| WO 2018/143159 A1 | 09 August 2018 | EP 3578600 A1<br>CN 110198979 A<br>KR 10-2019-0112098 A |
| JP 2001-310976 A | 06 November 2001 | US 6492446 B1<br>EP 1063258 A2<br>TW 570958 B<br>CN 1278542 A |
| WO 2020/054248 A1 | 19 March 2020 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014129547 A
- JP 55142635 A